# EUROPEAN PATENT APPLICATION

(11) **EP 4 421 123 A1**
(43) Date of publication of application: **28.08.2024**
(21) Application number: 22883651.6
(22) Date of filing: 20.10.2022
(51) Int. Cl.: C08L 67/04, C08G 63/08, C08G 63/83

(54) **RESIN COMPOSITION**

(30) Priority: 22.10.2021 JP 2021173315
(71) Applicant: Kuraray Co., Ltd., Kurashiki-shi, Okayama 710-0801 (JP)
(72) Inventor: ISHIO, Muneki, Tsukuba-shi, Ibaraki 305-0841 (JP); SANO, Yuki, Tokyo 100-0004 (JP); HOSAKA, Yusaku, Tsukuba-shi, Ibaraki 305-0841 (JP)
(74) Representative: D Young & Co LLP
(86) International application number: PCT/JP2022/039199
(87) International publication number: WO 2023/068348

(57) **Abstract**

Provided is a resin composition containing a polylactic acid polymer and a β-methyl-δ-valerolactone polymer.

## Description

### Technical Field

The present invention relates to a resin composition containing a polylactic acid polymer and a β-methyl-δ-valerolactone polymer.

### Background Art

From the viewpoint of global environmental conservation, there is a demand for reducing the environmental load on plastic materials used in products in a wide range of fields. In order to reduce the environmental load, development of a plastic material using polylactic acid, which is one of "biodegradable plastics", has been actively conducted. However, a molded body made of polylactic acid is brittle compared to a petroleum-based plastic, and tends to be inferior in viscosity, flexibility, and heat resistance, and is easily hydrolyzed, and thus the use as a resin material may be limited.

Therefore, molded articles having various physical properties imparted thereto by molding a resin composition obtained by mixing a biodegradable aliphatic polyester with polylactic acid are known. For example, PTL 1 discloses a biodegradable string containing a lactic acid-based polymer, a biodegradable aliphatic polyester other than the lactic acid-based polymer, and a lubricant. The biodegradable string is biodegradable and can be continuously tied by a current binding machine. Further, PTL 2 discloses a biodegradable plastic or sheet composed of a polylactic acid polymer and a biodegradable aliphatic polyester. It is described that the biodegradable plastic or sheet is excellent in impact resistance.

In addition, various studies have been made on biodegradable aliphatic polyesters to be mixed with polylactic acid as described above to impart various physical properties. For example, as a biodegradable aliphatic polyester, PTL 3 discloses an alkyl-δ-valerolactone polyester having thermal stability and being in a liquid state. Furthermore, PTL 3 describes that a composition containing an alkyl-δ-valerolactone polyester and an organic carbodiimide compound is known as a plasticizer for a resin such as polyvinyl chloride.

### Citation List

### Patent Literature

PTL 1: JP H09-111107 A
PTL 2: JP 2001-115350 A
PTL 3: JP H03-181516 A

### Summary of Invention

### Technical Problem

PTLs 1 and 2 describe that an aliphatic polyester obtained by ring-opening polymerization of a cyclic lactone can be used as the biodegradable aliphatic polyester. However, PTLs 1 and 2 do not disclose details of the aliphatic polyester, such as molecular weight, viscosity, and specific structure. In addition, there is no specific disclosure regarding a resin composition containing the aliphatic polyester and polylactic acid.

Further, PTL 3 does not mention anything about the modification effect of the alkyl-δ-valerolactone polyester with respect to the polylactic acid.

Therefore, the present invention provides a resin composition comprising a polylactic acid polymer in which tensile elongation at break is improved and a decrease in glass transition temperature is suppressed.

### Solution to Problem

As a result of intensive studies to solve the above problems, the present inventors have conceived the following present invention and found that the problems can be solved.

In other words, the present invention is as follows.
[1] A resin composition comprising a polylactic acid polymer and a β-methyl-δ-valerolactone polymer.
[2] The resin composition according to [1] above, in which the β-methyl-δ-valerolactone polymer is represented by the following general formula (I): 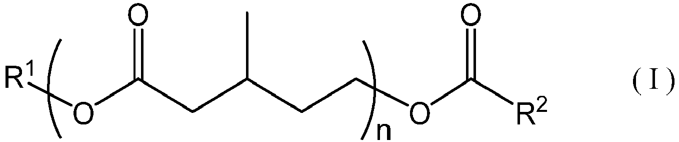 in the general formula (I), R¹ represents a hydrogen atom, a linear or branched alkyl group having 1 to 20 carbon atoms, a linear or branched alkenyl group having 2 to 20 carbon atoms, an aryl group having 6 to 12 carbon atoms, an arylalkyl group having 7 to 12 carbon atoms, an oxygen atom-containing hydrocarbon group in which one hydrogen atom bonded to a carbon atom at a terminal of a linear alkyl group having 1 to 20 carbon atoms is substituted with a group represented by the following formula (X), or an oxygen atom-containing hydrocarbon group in which one hydrogen atom bonded to a carbon atom at at least one terminal of a branched alkyl group having 3 to 20 carbon atoms is substituted with a group represented by the following formula (X); in the following formula (X), a bonding site represented by * is bonded to the linear alkyl group having 1 to 20 carbon atoms or the branched alkyl group having 3 to 20 carbon atoms; 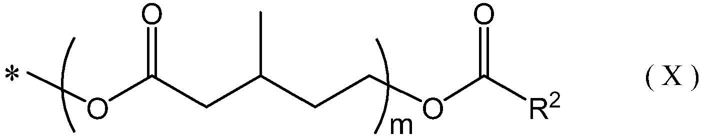 R² represents a linear or branched alkyl group having 1 to 20 carbon atoms, a linear or branched alkenyl group having 2 to 20 carbon atoms, an aryl group having 6 to 12 carbon atoms, or an arylalkyl group having 7 to 12 carbon atoms; n is an integer of 8 to 1,000, and m is an integer of 8 to 1,000; and when a plurality of R²'s and m's are present, they may be the same or different from each other.
[3] The resin composition according to [1] or [2] above, in which the β-methyl-δ-valerolactone polymer is contained in an amount of 0.1 parts by mass or more and 50 parts by mass or less with respect to 100 parts by mass of the polylactic acid polymer.
[4] The resin composition according to any one of [1] to [3] above, in which the β-methyl-δ-valerolactone polymer has a number average molecular weight of 1,000 or more and 100,000 or less.
[5] The resin composition according to any one of [1] to [3] above, in which the β-methyl-δ-valerolactone polymer is contained in an amount of 0.5 parts by mass or more and 2 parts by mass or less with respect to 100 parts by mass of the polylactic acid polymer, and the β-methyl-δ-valerolactone polymer has a number average molecular weight of 1,000 or more and 10,000 or less.
[6] The resin composition according to any one of [1] to [3] above, in which the β-methyl-δ-valerolactone polymer is contained in an amount of 2 parts by mass or more and 50 parts by mass or less with respect to 100 parts by mass of the polylactic acid polymer, and the β-methyl-δ-valerolactone polymer has a number average molecular weight of 1,000 or more and 100,000 or less.
[7] The resin composition according to any one of [1] to [6] above, in which the polylactic acid polymer is a homopolymer of L-lactic acid, a homopolymer of D-lactic acid, or a copolymer of L-lactic acid and D-lactic acid.
[8] A molded body including the resin composition according to any one of [1] to [7] above.
[9] A modifier for a polylactic acid polymer, comprising a β-methyl-δ-valerolactone polymer represented by the following general formula (I): 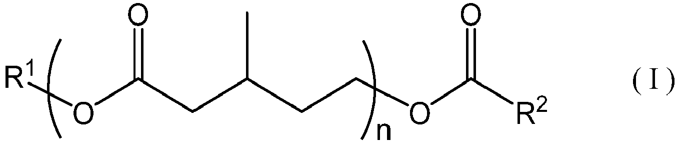 in the general formula (I), R¹ represents a hydrogen atom, a linear or branched alkyl group having 1 to 20 carbon atoms, a linear or branched alkenyl group having 2 to 20 carbon atoms, an aryl group having 6 to 12 carbon atoms, an arylalkyl group having 7 to 12 carbon atoms, an oxygen atom-containing hydrocarbon group in which one hydrogen atom bonded to a carbon atom at a terminal of a linear alkyl group having 1 to 20 carbon atoms is substituted with a group represented by the following formula (X), or an oxygen atom-containing hydrocarbon group in which one hydrogen atom bonded to a carbon atom at at least one terminal of a branched alkyl group having 3 to 20 carbon atoms is substituted with a group represented by the following formula (X);
   in the following formula (X), a bonding site represented by * is bonded to the linear alkyl group having 1 to 20 carbon atoms or the branched alkyl group having 3 to 20 carbon atoms; 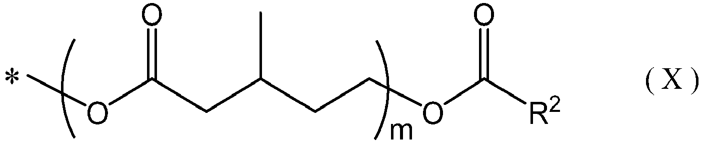 R² represents a linear or branched alkyl group having 1 to 20 carbon atoms, a linear or branched alkenyl group having 2 to 20 carbon atoms, an aryl group having 6 to 12 carbon atoms, or an arylalkyl group having 7 to 12 carbon atoms; n is an integer of 8 to 1,000, and m is an integer of 8 to 1,000; and when a plurality of R²'s and m's are present, they may be the same or different from each other.
[10] Use of a β-methyl-δ-valerolactone polymer represented by the following general formula (I) as a modifier for a polylactic acid polymer: 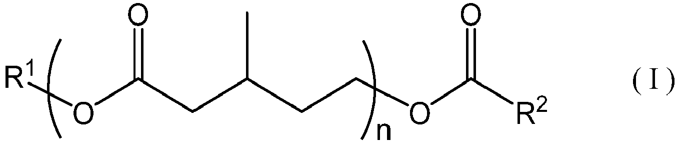 in the general formula (I), R¹ represents a hydrogen atom, a linear or branched alkyl group having 1 to 20 carbon atoms, a linear or branched alkenyl group having 2 to 20 carbon atoms, an aryl group having 6 to 12 carbon atoms, an arylalkyl group having 7 to 12 carbon atoms, an oxygen atom-containing hydrocarbon group in which one hydrogen atom bonded to a carbon atom at a terminal of a linear alkyl group having 1 to 20 carbon atoms is substituted with a group represented by the following formula (X), or an oxygen atom-containing hydrocarbon group in which one hydrogen atom bonded to a carbon atom at at least one terminal of a branched alkyl group having 3 to 20 carbon atoms is substituted with a group represented by the following formula (X); in the following formula (X), a bonding site represented by * is bonded to the linear alkyl group having 1 to 20 carbon atoms or the branched alkyl group having 3 to 20 carbon atoms; 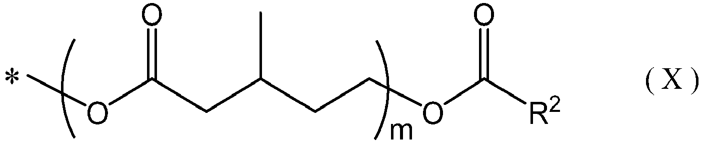 R² represents a linear or branched alkyl group having 1 to 20 carbon atoms, a linear or branched alkenyl group having 2 to 20 carbon atoms, an aryl group having 6 to 12 carbon atoms, or an arylalkyl group having 7 to 12 carbon atoms; n is an integer of 8 to 1,000, and m is an integer of 8 to 1,000; and when a plurality of R²'s and m's are present, they may be the same or different from each other.

### Advantageous Effects of Invention

According to the present invention, there is provided a resin composition comprising a polylactic acid polymer, in which tensile elongation at break is improved and a decrease in glass transition temperature is suppressed.

### Description of Embodiments

Hereinafter, a description will be given based on an example of embodiments of the present invention. However, the embodiments shown below are examples for embodying the technical idea of the present invention, and the present invention is not limited to the following description.

In addition, in the description herein, preferred forms of the embodiments are shown, but a combination of two or more of the individual preferred forms is also a preferred form. Regarding the matters indicated by the numerical ranges, in a case where there are several numerical ranges, it is possible to selectively combine the lower limit value and the upper limit value thereof to obtain a preferred embodiment.

In the description herein, when there is a description of a numerical range of "XX to YY", it means "XX or more and YY or less".

### <Resin Composition>

### [Polylactic Acid Polymer]

Examples of the polylactic acid resin used in the present embodiment include at least one selected from the group consisting of a homopolymer of L-lactic acid, a homopolymer of D-lactic acid, a copolymer of L-lactic acid and D-lactic acid, a homopolymer of DL-lactic acid, a copolymer of DL-lactic acid and L-lactic acid, a copolymer of DL-lactic acid and D-lactic acid, and a polymer of lactide which is a cyclic dimer of lactic acid.

In addition, the polylactic acid resin may be a copolymer of lactic acid and an aliphatic hydroxycarboxylic acid other than lactic acid, an aliphatic dicarboxylic acid, an aliphatic diol, or an aromatic dicarboxylic acid. The copolymer preferably contains a structural unit derived from lactic acid in an amount of preferably 70 mol% or more, and more preferably 90 mol% or more.

Among them, as the polylactic acid resin, a homopolymer of L-lactic acid, a homopolymer of D-lactic acid, or a copolymer of L-lactic acid and D-lactic acid is preferable, and a homopolymer of L-lactic acid is more preferable.

The polylactic acid resin may be used alone or in combination of two or more thereof.

As the polylactic acid polymer, a commercially available product may be used. Examples of the commercially available product include "INGEO series" (trade name) manufactured by NatureWorks LLC, "Luminy series" (trade name) manufactured by TOTAL CORBION, "Revode" series manufactured by Zhejiang Hisun Biomaterials Co., Ltd., and "SUPLA" (trade name) manufactured by SUPLA Material Technology Co., Ltd.

The weight average molecular weight of the polylactic acid resin is preferably 50,000 or more, more preferably 100,000 or more, and still more preferably 200,000 or more, from the viewpoint of tensile elongation at break. The weight average molecular weight of the polylactic acid resin is preferably 600,000 or less, more preferably 550,000 or less, and still more preferably 500,000 or less, from the viewpoint of molding processability and compatibility with the β-methyl-δ-valerolactone polymer. That is, the weight average molecular weight of the polylactic acid resin is preferably 50,000 or more and 600,000 or less.

The weight average molecular weight of the polylactic acid resin can be determined by gel permeation chromatography (GPC) measurement in terms of standard polystyrene. In addition, when a commercially available product is used, a catalog value may be adopted.

### [β-methyl-δ-valerolactone polymer]

The β-methyl-δ-valerolactone polymer (hereinafter, simply referred to as a "polymer" in some cases) used in the present embodiment is preferably a polymer represented by the following general formula (I).

By having a structure represented by the general formula (I), the following polymer serves as an excellent modifier for the polylactic acid polymer.

The following polymer is a polymer obtainable by ring-opening polymerization of β-methyl-δ-valerolactone, and since at least one hydroxy group at the molecular terminal is modified with another functional group, the polymer becomes a polymer in which a decrease in thermal decomposability is suppressed, and a decrease in the glass transition temperature of the resin composition can be suppressed. Further, it is expected that the polymer can improve the tensile elongation at break of the resin composition depending on the structure of the molecular terminal and the number of terminals, and in addition, that the polymer can exhibit properties with a good balance among an improvement in crystallization rate, an improvement in impact resistance, an improvement in hydrolysis resistance, other functions, and handleability.

Further, since the raw material of the polymer is β-methyl-δ-valerolactone, the resin composition of the present embodiment is considered to have good biodegradability.

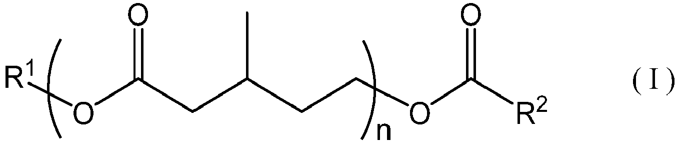

In the general formula (I), R¹ represents a hydrogen atom, a linear or branched alkyl group having 1 to 20 carbon atoms, a linear or branched alkenyl group having 2 to 20 carbon atoms, an aryl group having 6 to 12 carbon atoms, or an arylalkyl group having 7 to 12 carbon atoms. In the case of the above-mentioned "branched alkyl group", the number of carbon atoms is 3 to 20, and in the case of the above-mentioned "branched alkenyl group", the number of carbon atoms is 3 to 20.

Examples of the linear alkyl group having 1 to 20 carbon atoms include a methyl group, an ethyl group, a n-propyl group, a n-butyl group, a n-pentyl group, a n-hexyl group, a n-heptyl group, a n-octyl group, a n-nonyl group, a n-decyl group, a n-undecyl group, a n-dodecyl group, a n-tridecyl group, a n-tetradecyl group, a n-pentadecyl group, a n-hexadecyl group, a n-heptadecyl group, a n-octadecyl group, a n-nonadecyl group, and a n-icosyl group.

Examples of the branched alkyl group having 3 to 20 carbon atoms include an isopropyl group, a 1-methylpropyl group, a 2-methylpropyl group, a t-butyl group, a 1,1-dimethylpropyl group, a 2,2-dimethylpropyl group, a 1,2-dimethylpropyl group, a 1-ethylpropyl group, a 2-ethylpropyl group, a 1,1-diethylpropyl group, a 1-methylbutyl group, a 2-methylbutyl group, a 3-methylbutyl group, a 1,1-dimethylbutyl group, a 2,2-dimethylbutyl group, a 3,3-dimethylbutyl group, a 1,3,3-trimethylbutyl group, a 1-ethylbutyl group, a 2-ethylbutyl group, a 3,3-dimethylbutyl group, a 1-propylbutyl group, a 1-methylpentyl group, a 2-methylpentyl group, a 3-methylpentyl group, a 4-methylpentyl group, a 4,4-dimethylpentyl group, a 1-ethylpentyl group, a 2-ethylpentyl group, a 3-ethylpentyl group, a 4-ethylpentyl group, a 1-propylpentyl group, a 2-propylpentyl group, a 1-butylpentyl group, a 1-methylhexyl group, a 2-methylhexyl group, a 3-methylhexyl group, a 4-methylhexyl group, a 5-methylhexyl group, a 5,5-dimethylhexyl group, a 1-ethylhexyl group, a 2-ethylhexyl group, a 3-ethylhexyl group, a 4-ethylhexyl group, a 1-propylhexyl group, a 2-propylhexyl group, a 3-propylhexyl group, a 1-butylhexyl group, a 2-butylhexyl group, a 1-methylheptyl group, a 2-methylheptyl group, a 3-methylheptyl group, a 4-methylheptyl group, a 5-methylheptyl group, a 6-methylheptyl group, a 6,6-dimethylheptyl group, a 1-ethylheptyl group, a 2-ethylheptyl group, a 3-ethylheptyl group, a 4-ethylheptyl group, a 5-ethylheptyl group, a 1-propylheptyl group, a 2-propylheptyl group, a 3-propylheptyl group, a 1-methyloctyl group, a 2-methyloctyl group, a 3-methyloctyl group, a 4-methyloctyl group, a 5-methyloctyl group, a 6-methyloctyl group, a 7-methyloctyl group, a 7,7-dimethyloctyl group, a 1-ethyloctyl group, a 2-ethyloctyl group, a 3-ethyloctyl group, a 4-ethyloctyl group, a 5-ethyloctyl group, a 6-ethyloctyl group, a 1-methylnonyl group, a 2-methylnonyl group, a 3-methylnonyl group, a 4-methylnonyl group, a 5-methylnonyl group, a 6-methylnonyl group, a 7-methylnonyl group, an 8-methylnonyl group, and a 3,5,5-trimethylhexyl group.

From the viewpoint of handleability, the linear or branched alkyl group having 1 to 20 carbon atoms is preferably a linear or branched alkyl group having 1 to 16 carbon atoms, more preferably a linear or branched alkyl group having 1 to 10 carbon atoms, and still more preferably a linear or branched alkyl group having 1 to 5 carbon atoms. Specifically, a methyl group, an ethyl group, a n-propyl group, an isopropyl group, a n-butyl group, a 1-methylbutyl group, a 3-methylbutyl group, a n-pentyl group, and a 2,2-dimethylpropyl group are preferable.

Examples of the linear alkenyl group having 2 to 20 carbon atoms include an ethenyl group, a n-propenyl group, a n-butenyl group (for example, a 2-butenyl group and a 3-butenyl group), a n-pentenyl group (for example, a 3-pentenyl group and a 4-pentenyl group), a n-hexenyl group (for example, a 1-hexenyl group and a 5-hexenyl group), a n-heptenyl group (for example, a 1-heptenyl group and a 1,3-heptadienyl group), a n-octenyl group (for example, a 7-octenyl group and a 2,7-octadienyl group), a n-nonenyl group (for example, a 3-nonenyl group and a 3,6-nonadienyl group), a n-decenyl group (for example, a 1,3-decadienyl group and a 1,3,5-decatrienyl group), a n-undecenyl group (for example, 2-undecenyl and a 2,4-undecadienyl group), a n-dodecenyl group (for example, a 2-dodecenyl group), a tridecenyl grouop (for example, a 2-tridecenyl group), a n-tetradecenyl group (for example, a 2-tetradecenyl group), a n-pentadecenyl group (for example, a 2-pentadecenyl group), a n-hexadecenyl group (for example, a 2-hexadecenyl group), a n-heptadecenyl group (for example, a 2-heptadecenyl group), a n-octadecenyl group (for example, a 2-octadecenyl group), a n-nonadecenyl group (for example, a 2-nonadecenyl group), and a n-icosenyl group (for example, a 2-icosenyl group).

Examples of the branched alkenyl group having 3 to 20 carbon atoms include an isopropenyl group, a 1-methylpropenyl group, a 2-methylpropenyl group, a t-butenyl group, a 1,1-dimethylpropenyl group, a 2,2-dimethylpropenyl group, a 1,2-dimethylpropenyl group, a 1-ethylpropenyl group, a 2-ethylpropenyl group, a 1,1-diethylpropenyl group, a 1-methylbutenyl group, a 2-methylbutenyl group, a 3-methyl-2-butenyl group, a 3-methyl-3-butenyl group, a 1,1-dimethylbutenyl group, a 2,2-dimethylbutenyl group, a 3,3-dimethylbutenyl group, a 1,3,3-trimethylbutenyl group, a 1-ethylbutenyl group, a 2-ethylbutenyl group, a 3,3-dimethylbutenyl group, a 1-propylbutenyl group, a 1-methylpentenyl group, a 2-methylpentenyl group, a 3-methylpentenyl group, a 4-methylpentenyl group, a 4,4-dimethylpentenyl group, a 1-ethylpentenyl group, a 2-ethylpentenyl group, a 3-ethylpentenyl group, a 4-ethylpentenyl group, a 1-propylpentenyl group, a 2-propylpentenyl group, a 1-butylpentenyl group, a 1-methylhexenyl group, a 2-methylhexenyl group, a 3-methylhexenyl group, a 4-methylhexenyl group, a 5-methylhexenyl group, a 5,5-dimethylhexenyl group, a 1-ethylhexenyl group, a 2-ethylhexenyl group, a 3-ethylhexenyl group, a 4-ethylhexenyl group, a 1-propylhexenyl group, a 2-propylhexenyl group, a 3-propylhexenyl group, a 1-butylhexenyl group, a 2-butylhexenyl group, a 1-methylheptenyl group, a 2-methylheptenyl group, a 3-methylheptenyl group, a 4-methylheptenyl group, a 5-methylheptenyl group, a 6-methylheptenyl group, a 6,6-dimethylheptenyl group, a 1-ethylheptenyl group, a 2-ethylheptenyl group, a 3-ethylheptenyl group, a 4-ethylheptenyl group, a 5-ethylheptenyl group, a 1-propylheptenyl group, a 2-propylheptenyl group, a 3-propylheptenyl group, a 1-methyloctenyl group, a 2-methyloctenyl group, a 3-methyloctenyl group, a 4-methyloctenyl group, a 5-methyloctenyl group, a 6-methyloctenyl group, a 7-methyloctenyl group, a 7,7-dimethyloctenyl group, a 1-ethyloctenyl group, a 2-ethyloctenyl group, a 3-ethyloctenyl group, a 4-ethyloctenyl group, a 5-ethyloctenyl group, a 6-ethyloctenyl group, a 1-methylnonenyl group, a 2-methylnonenyl group, a 3-methylnonenyl group, a 4-methylnonenyl group, a 5-methylnonenyl group, a 6-methylnonenyl group, a 7-methylnonenyl group, an 8-methylnonenyl group, and a 3,5,5-trimethylhexenyl group.

From the viewpoint of handleability, the linear or branched alkenyl group having 2 to 20 carbon atoms is preferably a linear or branched alkenyl group having 2 to 15 carbon atoms, more preferably a linear or branched alkenyl group having 3 to 10 carbon atoms, and still more preferably a linear or branched alkenyl group having 3 to 6 carbon atoms.

Examples of the aryl group having 6 to 12 carbon atoms include a phenyl group, a 2-methylphenyl group, a 4-methylphenyl group, a 2,4-dimethylphenyl group, and a 2-naphthyl group. A phenyl group is preferable.

Examples of the arylalkyl group having 7 to 12 carbon atoms include a phenylmethyl group, a phenylethyl group, a phenylpropyl group, a phenylbutyl group, a phenylpentyl group, a phenylhexyl group, a naphthylmethyl group, and a naphthylethyl group. A phenylmethyl group is preferable.

Further, in the general formula (I), R¹ represents, in addition to the above-described substituents, an oxygen atom-containing hydrocarbon group in which one hydrogen atom bonded to a carbon atom at a terminal of a linear alkyl group having 1 to 20 carbon atoms is substituted with a group represented by the following formula (X), or an oxygen atom-containing hydrocarbon group in which one hydrogen atom bonded to a carbon atom at at least one terminal of a branched alkyl group having 3 to 20 carbon atoms is substituted with a group represented by the following formula (X). In the following formula (X), a bonding site represented by * is bonded to the linear alkyl group having 1 to 20 carbon atoms or the branched alkyl group having 3 to 20 carbon atoms.

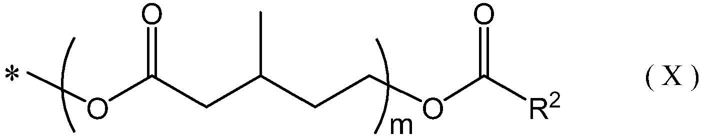

R² in the above formula (X) has the same definition as R² to be described later.

The linear alkyl group having 1 to 20 carbon atoms bonded to the formula (X) can be exemplified by the same groups as those exemplified as the "linear alkyl group having 1 to 20 carbon atoms" described above. The linear alkyl group having 1 to 20 carbon atoms bonded to the formula (X) is preferably a linear alkyl group having 1 to 15 carbon atoms, more preferably a linear alkyl group having 1 to 10 carbon atoms, still more preferably a linear alkyl group having 2 to 10 carbon atoms, and even more preferably a linear alkyl group having 2 to 5 carbon atoms.

The branched alkyl group having 3 to 20 carbon atoms bonded to the formula (X) can be exemplified by the same groups as those exemplified as the "branched alkyl group having 3 to 20 carbon atoms" described above. The branched alkyl group having 3 to 20 carbon atoms bonded to the formula (X) is preferably a branched alkyl group having 3 to 15 carbon atoms, more preferably a branched alkyl group having 3 to 10 carbon atoms, still more preferably a branched alkyl group having 3 to 6 carbon atoms, and may be a branched alkyl group having 3 to 5 carbon atoms.

In addition, one hydrogen atom bonded to all terminal carbon atoms of the branched alkyl group having 3 to 20 carbon atoms may be an oxygen atom-containing hydrocarbon group substituted with a group represented by the above formula (X).

m represents an average number of repetitions, and is an integer of 8 to 1,000, preferably 8 to 800, more preferably 10 to 500, and still more preferably 10 to 300, and may be 10 to 100, may be 10 to 80, and may be 10 to 60. When m is an integer of 8 or more, a more excellent modification effect can be obtained. When m is an integer of 1,000 or less, good moldability and productivity can be obtained.

When a plurality of groups represented by the formula (X) are present in R¹, they may be the same or different from each other.

In the above formula (I), a plurality of R²'s and m's may be present. When a plurality of R²'s are present, they may be the same or different from each other. When a plurality of m's are present, they may be the same or different from each other.

In a case where R¹ represents an oxygen atom-containing hydrocarbon group in which one hydrogen atom bonded to a carbon atom at a terminal of a linear alkyl group having 1 to 20 carbon atoms is substituted with a group represented by the formula (X), the following structural examples can be specifically exemplified as the above general formula (I).

### <1st Example>

In a case where R¹ represents an oxygen atom-containing hydrocarbon group in which one hydrogen atom bonded to a carbon atom at a terminal of a linear alkyl group having Q carbon atoms is substituted with a group represented by the formula (X), the above general formula (I) is represented by the following general formula (I-a): provided that Q is an integer of 1 to 20.

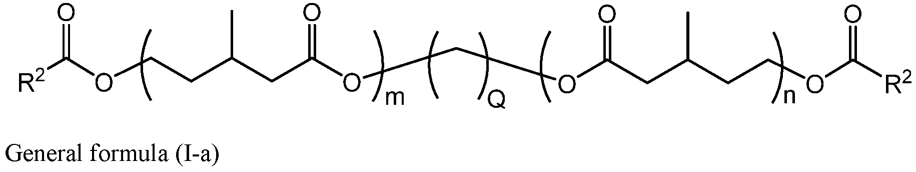

### <2nd Example>

In a case where R¹ represents an oxygen atom-containing hydrocarbon group in which one hydrogen atom bonded to a carbon atom at a terminal of an ethyl group is substituted with a group represented by the formula (X), the above general formula (I) is represented by the following general formula (I-b).

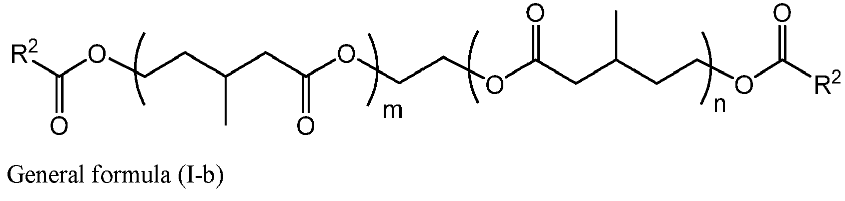

In a case where R¹ represents an oxygen atom-containing hydrocarbon group in which one hydrogen atom bonded to a carbon atom at at least one terminal of a branched alkyl group having 3 to 20 carbon atoms is substituted with a group represented by the formula (X), the following structural examples can be specifically exemplified as the above general formula (I).

### <3rd Example>

In a case where R¹ represents an oxygen atom-containing hydrocarbon group in which one hydrogen atom bonded to the carbon atom at each terminal carbon atom of the 2-methylpropyl group is substituted with a group represented by the formula (X), the above general formula (I) is represented by the following general formula (I-c).

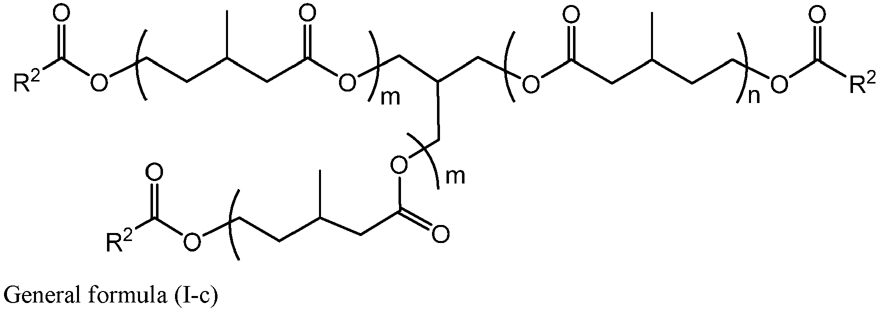

### <4th Example>

In a case where R¹ represents an oxygen atom-containing hydrocarbon group in which one hydrogen atom bonded to the carbon atom at two terminal carbon atoms of the 2,2-dimethylpropyl group is substituted with a group represented by the formula (X), the above general formula (I) is represented by the following general formula (I-d).

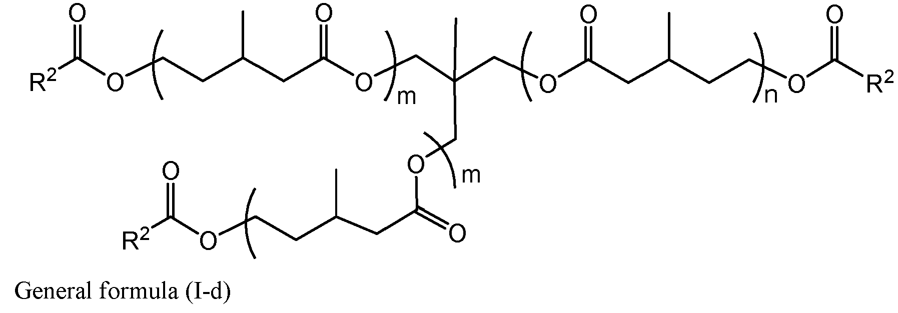

### <5th Example>

In a case where R¹ represents an oxygen atom-containing hydrocarbon group in which one hydrogen atom bonded to the carbon atom at two terminal carbon atoms of the 2,2-dimethylbutyl group is substituted with a group represented by the formula (X), the above general formula (I) is represented by the following general formula (I-e).

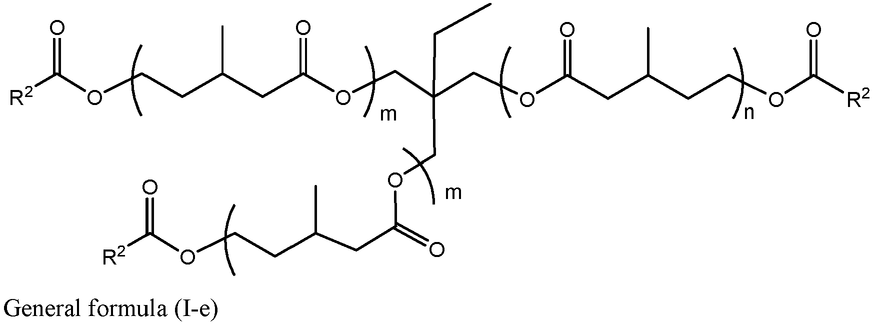

### <6th Example>

In a case where R¹ represents an oxygen atom-containing hydrocarbon group in which one hydrogen atom bonded to the carbon atom at each terminal carbon atom of the 2,2-dimethylpropyl group is substituted with a group represented by the formula (X), the above general formula (I) is represented by the following general formula (I-f).

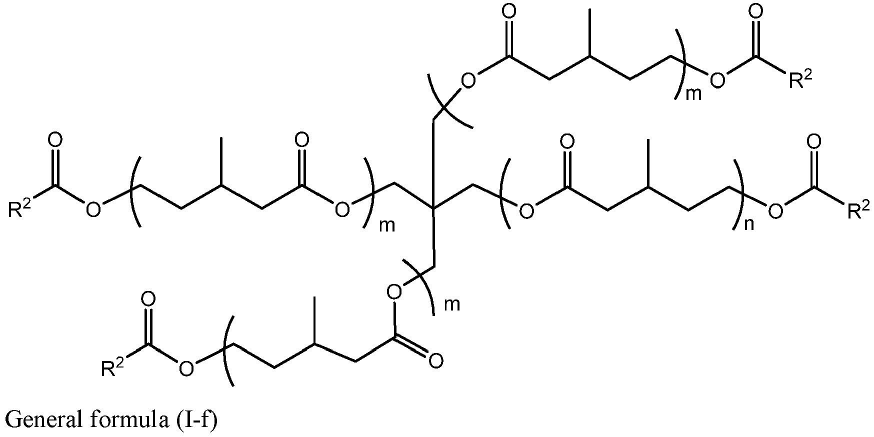

From the viewpoint of easily obtaining a modification effect, R¹ is preferably a linear or branched alkyl group having 1 to 20 carbon atoms, a linear alkenyl group having 2 to 20 carbon atoms, an aryl group having 6 to 12 carbon atoms, an arylalkyl group having 7 to 12 carbon atoms, an oxygen atom-containing hydrocarbon group in which one hydrogen atom bonded to a carbon atom at a terminal of a linear alkyl group having 1 to 20 carbon atoms is substituted with a group represented by the above formula (X), or an oxygen atom-containing hydrocarbon group in which one hydrogen atom bonded to a carbon atom at at least one terminal of a branched alkyl group having 3 to 20 carbon atoms is substituted with a group represented by the above formula (X).

In the general formula (I), R² represents a linear or branched alkyl group having 2 to 20 carbon atoms, a linear or branched alkenyl group having 2 to 20 carbon atoms, an aryl group having 6 to 12 carbon atoms, or an arylalkyl group having 7 to 12 carbon atoms. In the case of the above-mentioned "branched alkyl group", the number of carbon atoms is 3 to 20, and in the case of the above-mentioned "branched alkenyl group", the number of carbon atoms is 3 to 20.

The linear or branched alkyl group having 1 to 20 carbon atoms represented by R² can be exemplified by the same groups as those exemplified as the "linear or branched alkyl group having 1 to 20 carbon atoms" described above. From the viewpoint of handleability, the linear or branched alkyl group having 1 to 20 carbon atoms represented by R² is preferably a linear or branched alkyl group having 1 to 15 carbon atoms, more preferably a linear or branched alkyl group having 1 to 10 carbon atoms, and still more preferably a linear or branched alkyl group having 1 to 5 carbon atoms. Specifically, a methyl group, an ethyl group, a n-propyl group, an isopropyl group, a n-butyl group, a 1-methylbutyl group, a n-pentyl group, and a 2,2-dimethylpropyl group are preferable.

The linear or branched alkenyl group having 2 to 20 carbon atoms represented by R² can be exemplified by the same groups as those exemplified as the "linear or branched alkenyl group having 2 to 20 carbon atoms" described above. From the viewpoint of handleability, the linear or branched alkenyl group having 2 to 20 carbon atoms represented by R² is preferably a linear or branched alkenyl group having 2 to 15 carbon atoms, more preferably a linear or branched alkenyl group having 3 to 10 carbon atoms, and still more preferably a linear or branched alkenyl group having 3 to 6 carbon atoms.

The aryl group having 6 to 12 carbon atoms represented by R² can be exemplified by the same groups as those exemplified as the "aryl group having 6 to 12 carbon atoms" described above. The aryl group having 6 to 12 carbon atoms represented by R² is preferably a phenyl group.

The arylalkyl group having 7 to 12 carbon atoms represented by R² can be exemplified by the same groups as those exemplified as the "arylalkyl group having 7 to 12 carbon atoms" described above. The arylalkyl group having 7 to 12 carbon atoms represented by R² is preferably a phenylmethyl group.

From the viewpoint of easily obtaining a modification effect, R² is preferably a linear alkyl group having 1 to 10 carbon atoms or an aryl group having 6 to 12 carbon atoms.

n represents an average number of repetitions, and is an integer of 8 to 1,000, preferably 8 to 800, more preferably 10 to 600, still more preferably 10 to 500, and even more preferably 10 to 300. When n is an integer of 8 or more, a more excellent modification effect can be obtained. When n is an integer of 1,000 or less, good moldability and productivity can be obtained.

### (Number Average Molecular Weight)

The number average molecular weight of the polymer is preferably 1,000 or more, more preferably 1,500 or more, and still more preferably 2,000 or more, from the viewpoint that a more excellent modification effect is easily obtained. From the viewpoint of moldability and productivity, the number average molecular weight of the polymer is preferably 100,000 or less, more preferably 80,000 or less, and still more preferably 50,000 or less. That is, the number average molecular weight of the polymer is preferably 1,000 or more and 100,000 or less.

In the description herein, the number average molecular weight of the β-methyl-δ-valerolactone polymer is a number average molecular weight in terms of standard polystyrene obtained by gel permeation chromatography (GPC) measurement. A detailed measurement method can follow the method described in Examples.

### (Weight Average Molecular Weight)

The weight average molecular weight of the polymer is preferably 1,500 or more and 200,000 or less. When the weight average molecular weight is 1,500 or more, a more excellent modification effect is easily exhibited. When the weight average molecular weight is 200,000 or less, excellent handleability and productivity during molding are easily achieved. The weight average molecular weight of the polymer is more preferably 2,200 or more, and still more preferably 3,000 or more. The number average molecular weight of the polymer is more preferably 160,000 or less, still more preferably 125,000 or less, and even more preferably 100,000 or less.

In the description herein, the weight average molecular weight of the β-methyl-δ-valerolactone polymer is a weight average molecular weight in terms of standard polystyrene obtained by gel permeation chromatography (GPC) measurement. A detailed measurement method can follow the method described in Examples.

### (Viscosity)

In the present invention, the "viscosity" is a viscosity measured by an E-type viscometer. The measurement temperature can be optimized according to the molecular weight.

The viscosity of the polymer is preferably 400 mPa s or more at 80°C, and more preferably 1,000 mPa s or more at 80°C, from the viewpoint of exhibiting a more excellent modification effect. From the viewpoint of moldability and productivity, it is preferably 200,000 mPa·s or less at 80°C, and more preferably 150,000 mPa·s or less at 80°C. That is, the viscosity of the polymer is preferably 400 mPa·s or more and 200,000 mPa·s or less at a measurement temperature of 80°C.

When the polymer is measured by an E-type viscometer, the measurement temperature can be set according to the molecular weight. It is also a preferred embodiment that the polymer has a viscosity of, for example, preferably 3,500 to 150,000 mPa·s, and more preferably 4,000 to 150,000 mPa s at 30°C. In addition, it is also a preferred embodiment that the polymer has a viscosity of, for example, preferably 650 to 150,000 mPa s, and more preferably 800 to 150,000 mPa·s at 60°C.

### (Method for Producing Polymer)

The method for producing the β-methyl-δ-valerolactone polymer is not particularly limited. However, from the viewpoint of productivity and simplicity, or in the case of producing a polymer having a high molecular weight, it is preferable to adopt a production method including a step of performing a terminal modification reaction by adding a terminal modifying agent to a reaction liquid obtained by reacting β-methyl-δ-valerolactone, an alcohol compound or water, and a base catalyst (hereinafter, also referred to as a "reaction step").

The production method is characterized in that a terminal modifying agent is added directly to a reaction liquid obtained by reacting β-methyl-δ-valerolactone, an alcohol compound or water, and a base catalyst. That is, after the ring-opening polymerization of β-methyl-δ-valerolactone, the terminal modifying agent can be added to the reactor in which the ring-opening polymerization is performed without taking out the ring-opening polymer once, and the terminal modification of the ring-opening polymer can be performed. Since the reaction step is performed by the ring-opening polymerization reaction and the terminal modification reaction in one pot, the above production method can be said to be a simplified process.

The method for producing the polymer is not limited to the above-described production method.

Here, Reference Example 1 of PTL 3 describes that when both terminals of polyβ-methyl-δ-valerolactone) diol are modified with acetic anhydride, the molecular weight is reduced.

Usually, β-methyl-δ-valerolactone becomes a ring-opened polymer having a hydroxy group at the terminal by a ring-opening polymerization reaction. When the ring-opening polymer has a hydroxy group at the terminal as described above, depolymerization is likely to occur. Since the terminal modification of the ring-opening polymer once taken out is performed at a relatively high temperature (about 100°C), the thermal decomposition rate tends to be high, and it is considered that the ring-opening polymer causes depolymerization to reduce the molecular weight.

On the other hand, in the present embodiment, according to the above-described production method, it is possible to obtain a polymer having a high molecular weight without reducing the molecular weight in spite of the fact that the terminal is modified.

### <Alcohol Compound or Water>

The alcohol compound that can be used in the present embodiment is not particularly limited as long as the effects of the present invention can be obtained.

Examples of the alcohol compound include an alcohol of a linear or branched aliphatic hydrocarbon having 1 to 20 carbon atoms, an alcohol of an aromatic hydrocarbon having 6 to 12 carbon atoms, and an alcohol of an alkyl aromatic hydrocarbon having 7 to 12 carbon atoms. These alcohol compounds may have a saturated or unsaturated hydrocarbon group. In the case of the above-mentioned "alcohol of a branched aliphatic hydrocarbon", the number of carbon atoms is 3 to 20.

The alcohol compound may be a monohydric alcohol or may be a polyhydric alcohol such as a dihydric alcohol or a trihydric alcohol.

The water that can be used in the present embodiment is not particularly limited as long as the effects of the present invention can be obtained. For example, tap water, distilled water, ion-exchanged water, industrial water, or deionized water can be used.

### <Base Catalyst>

Examples of the base catalyst that can be used in the present embodiment include metal catalysts such as alkali metals and alkali metal compounds, and organic base compounds. The base catalyst may be used alone or in combination of two or more thereof.

Examples of the alkali metal compound include an organic alkali metal compound, an alkali metal hydroxide compound, and an alkali metal hydride compound, and among these, an organolithium compound such as butyllithium is preferable.

Examples of the organic base compound include amine compounds having an amidine skeleton or a guanidine skeleton.

In addition, as the base catalyst, a metal catalyst such as an organic magnesium compound and an organic zinc compound can also be used.

In the reaction step, the base catalyst is preferably added in an amount of 0.005 to 1.5 molar equivalents relative to the hydroxy group of the alcohol compound. When water is used, the basic catalyst is preferably added in an amount of 0.005 to 3.0 molar equivalents relative to the water.

### <β-Methyl-δ-Valerolactone>

As the β-methyl-δ-valerolactone that can be used in the present embodiment, one produced by a known method can be used. For example, it can be produced by a known method using 2-hydroxy-4-methyltetrahydropyran as a raw material (JP H06-053691 B).

In addition, β-methyl-δ-valerolactone can be a commercially available product, and can be used regardless of whether it is derived from petrochemicals or from biomass.

In the reaction step, β-methyl-δ-valerolactone is preferably added in an amount of 5 to 1,500 molar equivalents relative to the hydroxy group of the alcohol compound. When water is used, β-methyl-δ-valerolactone is preferably added in an amount of 5 to 1,500 molar equivalents relative to the water.

### <Terminal Modifying Agent>

Examples of the terminal modifying agent that can be used in the present embodiment include acid anhydrides and acid halides (acid halides are also referred to as "halogenated esters"). The acid anhydride and the acid halide are not particularly limited as long as the effects of the present invention can be obtained. For example, acid anhydrides and acid halides having at least one group selected from the group consisting of a linear or branched alkyl group having 1 to 20 carbon atoms, a linear or branched alkenyl group having 2 to 20 carbon atoms, an aryl group having 6 to 12 carbon atoms, and an arylalkyl-group having 7 to 12 carbon atoms can be used. In the case of the above-mentioned "branched alkyl group", the number of carbon atoms is 3 to 20, and in the case of the above-mentioned "branched alkenyl group", the number of carbon atoms is 3 to 20.

Specific examples of the acid anhydride include acetic anhydride, oxalic anhydride, propionic anhydride, succinic anhydride, maleic anhydride, benzoic anhydride, phthalic anhydride, glutaric anhydride, methacrylic anhydride, butyric anhydride, isobutyric anhydride, 1,8-naphthalic anhydride, trifluoroacetic anhydride, and cyclohexanecarboxylic acid anhydride.

Specific examples of the acid halide include acetyl chloride, propionyl chloride, butyroyl chloride, trifluoroacetyl chloride, benzoyl chloride, 2-furoyl chloride, hexanoyl chloride, phenylacetyl chloride, acetyl bromide, propionyl bromide, and benzoyl bromide.

In the reaction step, the terminal modifying agent is preferably added in an amount of 1 to 20.0 molar equivalents relative to the hydroxy group of the alcohol compound. When water is used, the terminal modifying agent is preferably added in an amount of 1.0 to 20.0 molar equivalents relative to the water.

### <Co-catalyst>

In the reaction step, a co-catalyst may be added as necessary.

As the co-catalyst, for example, an amine compound such as triethylamine, tributylamine, trioctylamine, imidazole, pyridine, aminopyridine, or 4-dimethylaminopyridine can be used.

In the reaction step, the co-catalyst can be added in an amount of 0.001 to 10 molar equivalents relative to the hydroxy group of the alcohol compound. When water is used, the co-catalyst can be added in an amount of 0.001 to 10 molar equivalents relative to the water.

### <Solvent>

The reaction step can be carried out in the presence of a solvent inert to the ring-opening polymerization reaction. Examples of the solvent include aliphatic hydrocarbons such as cyclohexane, methylcyclohexane, n-hexane, and n-pentane; and aromatic hydrocarbons such as benzene, toluene, and xylene.

### <Reaction Conditions>

In the reaction step, the reaction temperature when β-methyl-δ-valerolactone, an alcohol compound or water, and a base catalyst are reacted is usually 20 to 100°C, and the reaction time is usually 1 minute to 24 hours.

In addition, after the terminal modifying agent is added to the reaction liquid in the reaction step, the reaction temperature at the time of performing the terminal modification reaction may be usually 20 to 80°C, and the reaction time is usually 1 minute to 24 hours.

### <Post-Treatment Step>

The polymer represented by the above general formula (I) can be produced through the above reaction step. If necessary, a post-treatment step may be performed to isolate the produced polymer.

As the post-treatment step, a suitable method can be adopted from known methods. For example, the reaction mixture after the reaction step is washed using a reaction solvent and water, and then concentrated, and can be purified by a method used for separation and purification of ordinary organic compounds, such as distillation.

### [Content Ratio]

The resin composition of the present embodiment contains the β-methyl-δ-valerolactone polymer in an amount of preferably 0.1 parts by mass or more and 50 parts by mass or less, more preferably 0.5 parts by mass or more and 30 parts by mass or less, and still more preferably 1.0 part by mass or more and 15 parts by mass or less with respect to 100 parts by mass of the polylactic acid polymer. When the content ratio is in the above range, it is possible to obtain a resin composition which is more excellent in both of improvement of tensile elongation at break and suppression of decrease in glass transition temperature. In addition, from the viewpoint of remarkably improving the tensile elongation at break, the resin composition of the present embodiment can also be configured such that the content of the β-methyl-δ-valerolactone polymer is 2.0 parts by mass or more and 15 parts by mass or less with respect to 100 parts by mass of the polylactic acid polymer.

In addition, as one of more preferred embodiments, a resin composition containing 0.5 parts by mass or more and 2 parts by mass or less of a β-methyl-δ-valerolactone polymer with respect to 100 parts by mass of a polylactic acid polymer, in which the number average molecular weight of the β-methyl-δ-valerolactone polymer is 1,000 or more and 10,000 or less (more preferably 2,000 or more and 10,000 or less) is exemplified. The resin composition is more excellent in both of the improvement of the tensile elongation at break and the suppression of the decrease in the glass transition temperature, and can further exhibit the improvement of the crystallization rate.

In addition, as one of more preferred embodiments, a resin composition containing 2 parts by mass or more and 50 parts by mass or less (more preferably 2 parts by mass or more and 30 parts by mass or less, and still more preferably 2 parts by mass or more and 15 parts by mass or less) of a β-methyl-δ-valerolactone polymer with respect to 100 parts by mass of a polylactic acid polymer, in which the number average molecular weight of the β-methyl-δ-valerolactone polymer is 1,000 or more and 100,000 or less (more preferably 2,000 or more and 50,000 or less) is exemplified. The resin composition is more excellent in both of the improvement of the tensile elongation at break and the suppression of the decrease in the glass transition temperature, and can further exhibit the improvement of the impact resistance.

The total content ratio of the polylactic acid polymer and the β-methyl-δ-valerolactone polymer in the resin composition of the present embodiment is preferably 80% by mass or more, more preferably 85% by mass or more, still more preferably 90% by mass or more, even more preferably 95% by mass or more, and even more preferably 98% by mass or more. The total content ratio of the polylactic acid polymer and the β-methyl-δ-valerolactone polymer in the resin composition of the present embodiment may be 100% by mass or less. When the content ratio is within the above range, the effects of the present invention are more remarkably exhibited.

### [Additive]

The resin composition of the present embodiment may contain an additive other than the polylactic acid polymer and the β-methyl-δ-valerolactone polymer.

Examples of the additive include an inorganic filler, a softening agent, a thermal aging inhibitor, an antioxidant, a hydrolysis inhibitor, a light stabilizer, an antistatic agent, a release agent, a flame retardant, a foaming agent, a pigment, a dye, a whitening agent, an ultraviolet absorber, and a lubricant. These may be used alone or in combination of two or more thereof.

In a case where the above-described additive is used, the content of the additive in the resin composition may be appropriately determined according to desired physical properties of the resin composition.

### [Method for Producing Resin Composition]

The method for producing the resin composition of the present embodiment is not particularly limited, and the polylactic acid polymer, the β-methyl-δ-valerolactone polymer, and the additive as necessary may be uniformly mixed.

Examples of the mixing method include a method of melt-kneading using a single-screw extruder, a multi-screw extruder, a Banbury mixer, a heating roll, a Brabender, or various kneaders, and a method of melt-kneading by supplying each component from a separate charging port.

In addition, pre-blending may be performed before melt-kneading. Examples of the pre-blending method include a method using a mixer such as a Henschel mixer, a high-speed mixer, a V blender, a ribbon blender, a tumbler blender, or a conical blender. The temperature at the time of melt-kneading can be arbitrarily selected preferably in the range of 140 to 220°C in consideration of the melting point and the decomposition temperature of the polylactic acid polymer.

### <Molded Body>

The present invention also provides a molded body made of the resin composition.

The shape of the molded body may be any molded body that can be produced using the resin composition of the present embodiment. Examples of the molded body include molded bodies having various shapes such as a pellet, a film, a sheet, a plate, a pipe, a tube, a bottle, a fibrous body, a rod-like body, a fine particulate body, a granular body, and a foamed body. The method for producing the molded body is not particularly limited, and the molded body can be molded by various molding methods, for example, known methods such as injection molding, blow molding, press molding, extrusion molding, calender molding, and molding by a 3D printer.

### <Applications>

When the polylactic acid polymer is mixed with the β-methyl-δ-valerolactone polymer represented by the above general formula (I) to form a resin composition, the tensile elongation at break can be improved and a decrease in the glass transition temperature can be suppressed. Accordingly, the present invention provides a modifier for a polylactic acid polymer, containing a β-methyl-δ-valerolactone polymer represented by the above general formula (I).

In addition, use of the β-methyl-δ-valerolactone polymer represented by the above general formula (I) as a modifier for a polylactic acid polymer is exemplified as a preferred embodiment.

The resin composition of the present embodiment can be used for various applications.

Examples of applications of the resin composition include food utensils such as bags for food, caps for food, trays for food, straws, cutlery, and food containers; stoppers and cap liners for containers for storing foods, beverages, and drugs; single-layer or multi-layer films and sheets such as electronic parts packaging materials, pharmaceutical packaging materials, food packaging materials, agricultural materials, civil engineering and construction materials, and industrial materials; fibers such as textiles and non-woven fabrics; adhesives (tackifiers) and adhesive (adhesion imparting) agents such as solvent-type, hot-melt-type, and hot-stretch-type; coating agents such as aqueous-type, solution-type, emulsion-type, and dispersion-type; filaments for 3D printers; developing toners; support materials at the time of hydraulic fracture and water loss inhibitors at the time of excavation; various anti-vibration and vibration-damping members such as anti-vibration rubbers, mats, sheets, cushions, dampers, pads, and mounting rubbers; members such as housings of household electric appliances such as televisions, stereos, vacuum cleaners, and refrigerators, or mobile phones; automobile interior and exterior parts such as bumper parts, body panels, weather strips, grommets, instrument panel skins, and airbag covers; and various grips such as scissors, drivers, toothbrushes, and ski poles.

### Examples

Hereinafter, the present invention will be specifically described with reference to Examples and Comparative Examples, but the present invention is not limited thereto.

### <Measurement and Evaluation Method>

Various physical properties of the polymer and the resin composition were measured or evaluated by the following methods.

### [Number Average Molecular Weight] and [Weight Average Molecular Weight]

Each of the polymers obtained in Production Examples was used as a sample, and the number average molecular weight (Mn) and the weight average molecular weight (Mw) were determined as molecular weights in terms of standard polystyrene by gel permeation chromatography (GPC).

### <Case Where Mn is less than 15,000>

A sample having Mn of less than 15,000 was measured according to the following to obtain Mn and Mw.

Tetrahydrofuran (THF) solution was used as an eluent. A sample (10 mg in terms of resin) was weighed and dissolved in 1 mL of the above eluent. A measurement sample was prepared by passing the solution through a 0.2 µm membrane filter. The measurement conditions were as follows.

### (Measurement Conditions)

Apparatus: HLC-8320GPC EcoSEC (manufactured by Tosoh Corporation)
Column: KF-803, KF-802.5, KF-802 (manufactured by Showa Denko K.K.), three columns were connected in series.
Eluent: tetrahydrofuran
Flow rate: 0.9 mL/min
Sample injection volume: 30 µL
Column temperature: 40°C
Standard polystyrene: approximated in a cubic equation using PSt Oligomer Kit (molecular weight: 589 to 98,900) manufactured by Tosoh Corporation.
Detector: RI detector

### <Case Where Mn is 15,000 or more>

A sample having Mn of 15,000 or more was measured according to the following to obtain Mn and Mw.

Tetrahydrofuran (THF) solution was used as an eluent. A sample (1.0 mg in terms of resin) was weighed and dissolved in 1 mL of the above eluent. A measurement sample was prepared by passing the solution through a 0.2 µm membrane filter. The measurement conditions were as follows.

### (Measurement Conditions)

Apparatus: HLC-8220GPC (manufactured by Tosoh Corporation)
Column: TSK-gel SuperMultiporeHZ-M (manufactured by Tosoh Corporation), two columns were connected in series.
Eluent: tetrahydrofuran
Flow rate: 0.35 mL/min
Sample injection volume: 10 µL
Column temperature: 40°C
Standard polystyrene: approximated in a cubic equation using Polystyrene Molecular Weight Analytical Standard (molecular weight: 580 to 1,214,000) manufactured by GL Sciences Inc. Detector: RI detector

### [Viscosity]

The viscosity (unit: mPa·s) of the polymer obtained in Production Examples was measured at the measurement temperatures shown in Table 1 using an E-type viscometer ("TVE-25 type viscometer" manufactured by Toki Sangyo Co., Ltd.).

### [Glass Transition Temperature (Tg) and Melting Point (Tm)]

The resin compositions and resin composition sheets obtained in Examples 1 to 31 and Comparative Examples 1 to 12 were heated from 30°C to 220°C at a rate of 10°C/min under a nitrogen flow (100 mL/min) using a differential scanning calorimeter ("DSC25" manufactured by TA Instruments), held at 220°C for 5 minutes, and then cooled to -70°C at a rate of 10°C/min. The glass transition temperature and the melting point were evaluated when the temperature was raised to 220°C at a rate of 10°C/min after being held at -70°C for 5 minutes.

### [Crystallization Time (Crystallization Rate)]

The peak top of the crystallization peak was defined as the crystallization time when the resin composition obtained in each of Examples 1 to 28 and Comparative Examples 1 to 10 was heated from 30°C to 220°C at a rate of 10°C/min under a nitrogen flow (100 mL/min) using a differential scanning calorimeter ("DSC25" manufactured by TA Instruments), held at 220°C for 5 minutes, then cooled to 105°C at a rate of 60°C/min, and then held at 105°C for 60 minutes.

### [Impact Strength]

### (1) Preparation of Test Piece for Impact Resistance Test

Each of the resin compositions obtained in Examples 1 to 24 and Comparative Examples 1 to 9 was depressurized to -0.1 MPaG using an oil rotary pump and a reduced pressure hot press apparatus ("IMC-183B" manufactured by Imoto Machinery Co., Ltd.), preheated at 200°C for 5 minutes, and then pressed at 50 kN for 3 minutes. Thereafter, the mixture was pressed at 70 kgf/cm² for 3 minutes in a cooling press apparatus equipped with water flow cooling to prepare a press plate having a thickness of 3.0 mm. A strip piece of 80 × 10 mm was cut out from the obtained pressed plate and subjected to a crystallization treatment in a thermostatic bath at 80°C for 16 hours. V-notch processing (remaining width of 8 mm, tip radius of 0.25 mm) was performed on the center portion of the long side to prepare a notched strip test piece.

Multi-purpose test piece type A1 (dumbbell-shaped test piece described in JIS K 7139; thickness: 4 mm, total length: 170 mm, length of parallel portion: 80 mm, width of parallel portion: 10 mm) was produced by using each of the resin compositions obtained in Examples 25 to 28 and Comparative Example 10 in a T-runner mold under the conditions of a cylinder temperature of 190°C to 210°C and a mold temperature of 35°C using an injection molding machine (manufactured by NISSEI PLASTIC INDUSTRIAL CO., LTD., clamp force: 80 tons, screw diameter: ϕ26 mm). The obtained test piece was subjected to a crystallization treatment in a thermostatic bath at 80°C for 16 hours, a strip piece of 80 × 10 mm was cut out, and V-notch processing (remaining width of 8 mm, tip radius of 0.25 mm) was performed on the center portion of the long side to prepare a notched strip test piece.

A square piece of 50 × 50 mm was cut out from the resin composition sheet obtained in each of Examples 29 to 31 and Comparative Examples 11 and 12.

### (2) Impact Resistance Test

The notched strip test pieces prepared using the resin compositions obtained in Examples 1 to 28 and Comparative Examples 1 to 10 were stored at 23°C and a humidity of 49% for 24 hours or longer, and the impact strength at the time of measurement using a Charpy impact resistance testing machine ("DG-CB" manufactured by Toyo Seiki Seisaku-sho, Ltd.) at 23°C and a humidity of 49% with a hammer load of 2 J was evaluated. The average value of 10 measurements was adopted.

The square pieces (test pieces) prepared from the resin composition sheets obtained in Examples 29 to 31 and Comparative Examples 11 and 12 were measured by the following procedures (a) to (d) using a Du Pont impact testing machine (manufactured by Taiyu Kizai Co., Ltd.) to evaluate the impact strength.
(a) The test piece is disposed between the test piece support base and the hammer.
(b) The weight is supported from below by a presser bar at a certain height, and the presser bar is pulled out to drop the weight from the height toward the hammer.
(c) The weight of the weight and the height of the weight are variously changed to search for a boundary between "cracking" and "not cracking" of the test piece. For example, the dropping height of the weight is increased or decreased while observing the state of breakage of the test piece each time.
(d) The procedures of (b) and (c) were repeated 20 times, and the impact strength value (50% impact fracture energy, unit: J) was determined based on the obtained measurement results and the calculation formula in accordance with JIS K 7211-1. The obtained value is an index of impact resistance strength, and it can be said that the larger the value, the higher the impact resistance.

### [Tensile Test]

### (1) Preparation of Test Piece for Tensile Test

Each of the resin compositions obtained in Examples 1 to 24 and Comparative Examples 1 to 9 was depressurized to -0.1 MPaG using an oil rotary pump and a reduced pressure hot press apparatus ("IMC-183B" manufactured by Imoto Machinery Co., Ltd.), preheated at 200°C for 5 minutes, and then pressed at 70 kN for 3 minutes. Thereafter, the mixture was pressed at 70 kgf/cm² for 3 minutes in a cooling press apparatus equipped with water flow cooling to prepare a press plate having a thickness of 0.5 mm. A JIS Type 3 dumbbell-shaped test piece was punched out from the obtained press plate, and subjected to a crystallization treatment in a thermostatic bath at 80°C for 16 hours.

Multi-purpose test piece type A1 (dumbbell-shaped test piece described in JIS K 7139; thickness: 4 mm, total length: 170 mm, length of parallel portion: 80 mm, width of parallel portion: 10 mm) was produced by using each of the resin compositions obtained in Examples 25 to 28 and Comparative Example 10 in a T-runner mold under the conditions of a cylinder temperature of 190°C to 210°C and a mold temperature of 35°C using an injection molding machine (manufactured by NISSEI PLASTIC INDUSTRIAL CO.,LTD., clamp force: 80 tons, screw diameter: ϕ26 mm). The obtained dumbbell-shaped test piece was subjected to a crystallization treatment in a thermostatic bath at 80°C for 16 hours.

From the resin composition sheets prepared in Examples 29 to 31 and Comparative Examples 11 and 12, JIS Type 3 dumbbell-shaped test pieces were punched out.

### (2) Tensile Test

The prepared dumbbell-shaped test piece was stored at 23°C and a humidity of 49% for 24 hours or longer, and the initial tensile modulus (MPa), the maximum point strength (MPa), and the breaking elongation (breaking strain) (%) were measured by using a universal material testing machine ("INSTRON 5900 R-5666" manufactured by Instron Corporation or "AG-2000B" manufactured by Shimadzu Corporation) at 23°C and a humidity of 49% at a tensile speed of 5 mm/min. The average value of 5 measurements was adopted.

### [Bleed-Out Test]

The surface state of the dumbbell-shaped test piece prepared by the above-mentioned Preparation of Test Piece for Tensile Test when each of the resin compositions obtained in Examples 1 to 28 and Comparative Examples 1 to 10 was stored at 80°C for 16 hours or longer was visually and tactually evaluated.
A: No bleed-out and no stickiness are observed.
B: Slight bleed-out and stickiness are observed.
C: Significant bleed-out and stickiness are observed.

### [Total Light Transmittance]

A square piece (test piece) of 50 × 50 mm was cut out from the resin composition sheet prepared in each of Examples 29 to 31 and Comparative Examples 11 and 12. The total light transmittance of the test piece was measured by a method according to JIS K 7361-1 using a spectral haze meter ("Spectral Haze Meter SH7000" manufactured by Nippon Denshoku Industries Co., Ltd., light source D65).

### <Resin Composition>

The following polylactic acid polymer, β-methyl-δ-valerolactone polymer, and other components were used in Examples and Comparative Examples.

### (Polylactic Acid Polymer)

· "INGEO 2500HP" (trade name) manufactured by NatureWorks LLC (weight average molecular weight: 200,000)
· "INGEO 3001D" (trade name) manufactured by NatureWorks LLC (weight average molecular weight: 150,000)
· "INGEO 2003D" (trade name) manufactured by NatureWorks LLC (weight average molecular weight: 220,000)

### (Polymer)

· β-methyl-δ-valerolactone polymer produced in Production Examples 1 to 19

### (Other Components)

· Dibasic acid ester (manufactured by Daihachi Chemical Industry Co., Ltd., product name: DAIFATTY-101)
· Polybutylene succinate adipate (PBSA) resin (manufactured by Mitsubishi Chemical Corporation, product name: BioPBS FD92)
· Colloidal silica (manufactured by Nissan Chemical Corporation, product name:

### SNOWTEX C)

· Erucic acid amide (reagent: manufactured by Tokyo Chemical Industry Co., Ltd.)
· Hydrolysis inhibitor (manufactured by Nisshinbo Chemical Inc., product name:

### CARBODILITE HMV-5CA-LC)

### [Production Example 1]

A glass four-neck flask having an internal volume of 500 mL was substituted with nitrogen, 7.9 g (90 mmol) of isoamyl alcohol and 231 g (2,025 mmol) of β-methyl-δ-valerolactone were added thereto, and the temperature was raised to 60°C. 0.84 mL of n-butyllithium (1.6 M hexane solution) was added thereto, and the mixture was stirred at 60°C for 60 minutes.

Next, 11.0 g (108 mmol) of acetic anhydride and 0.55 g (4.5 mmol) of 4-dimethylaminopyridine dissolved in 5.5 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 155 g (0.04 mmol) of a polymer.

The obtained polymer (hereinafter, may be referred to as "PMVL-1") is represented by the general formula (I) described above, and R¹, R², and n are as shown in Table 1.

### [Production Example 2]

A glass four-neck flask having an internal volume of 500 mL was substituted with nitrogen, 1.6 g (18.2 mmol) of isoamyl alcohol and 231 g (2,025 mmol) of β-methyl-δ-valerolactone were added thereto, and the temperature was raised to 60°C. 0.35 mL of n-butyllithium (1.6 M hexane solution) was added thereto, and the mixture was stirred at 60°C for 60 minutes.

Next, 2.3 g (22.5 mmol) of acetic anhydride and 0.11 g (0.9 mmol) of 4-dimethylaminopyridine dissolved in 1.1 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 162 g (0.016 mmol) of a polymer.

The obtained polymer (hereinafter, may be referred to as "PMVL-2") is represented by the general formula (I) described above, and R¹, R², and n are as shown in Table 1.

### [Production Example 3]

A glass four-neck flask having an internal volume of 1,000 mL was substituted with nitrogen, 1.6 g (18.2 mmol) of isoamyl alcohol and 623 g (5,460 mmol) of β-methyl-δ-valerolactone were added thereto, and the temperature was raised to 60°C. 0.34 mL of n-butyllithium (1.6 M hexane solution) was added thereto, and the mixture was stirred at 60°C for 60 minutes.

Next, 2.2 g (21.8 mmol) of acetic anhydride and 0.11 g (0.9 mmol) of 4-dimethylaminopyridine dissolved in 1.1 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 450 g (0.016 mmol) of a polymer.

The obtained polymer (hereinafter, may be referred to as "PMVL-3") is represented by the general formula (I) described above, and R¹, R², and n are as shown in Table 1.

### [Production Example 4]

A glass four-neck flask having an internal volume of 1,000 mL was substituted with nitrogen, 0.9 g (10 mmol) of isoamyl alcohol and 627 g (5,500 mmol) of β-methyl-δ-valerolactone were added thereto, and the temperature was raised to 60°C. 0.41 mL of n-butyllithium (1.6 M hexane solution) was added thereto, and the mixture was stirred at 60°C for 60 minutes.

Next, 1.2 g (12 mmol) of acetic anhydride and 0.06 g (0.5 mmol) of 4-dimethylaminopyridine dissolved in 1.0 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 470 g (0.01 mmol) of a polymer.

The obtained polymer (hereinafter, may be referred to as "PMVL-4") is represented by the general formula (I) described above, and R¹, R², and n are as shown in Table 1.

### [Production Example 5]

A glass four-neck flask having an internal volume of 3,000 mL was substituted with nitrogen, 0.9 g (10 mmol) of isoamyl alcohol and 913 g (8,000 mmol) of β-methyl-δ-valerolactone were added thereto, and the temperature was raised to 60°C. 0.45 mL of n-butyllithium (1.6 M hexane solution) was added thereto, and the mixture was stirred at 60°C for 60 minutes.

Next, 1.2 g (12 mmol) of acetic anhydride and 0.06 g (0.5 mmol) of 4-dimethylaminopyridine dissolved in 1.0 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 620 g (0.008 mmol) of a polymer.

The obtained polymer (hereinafter, may be referred to as "PMVL-5") is represented by the general formula (I) described above, and R¹, R², and n are as shown in Table 1.

### [Production Example 6]

A glass four-neck flask having an internal volume of 500 mL was substituted with nitrogen, 5.6 g (90 mmol) of ethylene glycol and 231 g (2,025 mmol) of β-methyl-δ-valerolactone were added thereto, and the temperature was raised to 60°C. 0.79 mL of n-butyllithium (1.6 M hexane solution) was added thereto, and the mixture was stirred at 60°C for 60 minutes.

Next, 22.1 g (216 mmol) of acetic anhydride and 1.1 g (9.0 mmol) of 4-dimethylaminopyridine dissolved in 11 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 158 g (0.04 mmol) of a polymer.

The obtained polymer (hereinafter, may be referred to as "PMVL-6") is represented by the general formula (I-b) described above, and R¹, R², n, and m are as shown in Table 1.

### [Production Example 7]

A glass four-neck flask having an internal volume of 500 mL was substituted with nitrogen, 5.6 g (90 mmol) of ethylene glycol and 231 g (2,025 mmol) of β-methyl-δ-valerolactone were added thereto, and the temperature was raised to 60°C. 0.79 mL of n-butyllithium (1.6 M hexane solution) was added thereto, and the mixture was stirred at 60°C for 60 minutes.

Next, 34.2 g (216 mmol) of butyric anhydride and 1.1 g (9.0 mmol) of 4-dimethylaminopyridine dissolved in 11 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 158 g (0.04 mmol) of a polymer.

The obtained polymer (hereinafter, may be referred to as "PMVL-7") is represented by the general formula (I-b) described above, and R¹, R², n, and m are as shown in Table 1.

### [Production Example 8]

A glass four-neck flask having an internal volume of 500 mL was substituted with nitrogen, 5.6 g (90 mmol) of ethylene glycol and 231 g (2,025 mmol) of β-methyl-δ-valerolactone were added thereto, and the temperature was raised to 60°C. 0.84 mL of n-butyllithium (1.6 M hexane solution) was added thereto, and the mixture was stirred at 60°C for 60 minutes.

Next, 48.9 g (216 mmol) of benzoic anhydride and 1.1 g (9.0 mmol) of 4-dimethylaminopyridine dissolved in 11 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 153 g (0.05 mmol) of a polymer.

The obtained polymer (hereinafter, may be referred to as "PMVL-8") is represented by the general formula (I-b) described above, and R¹, R², n, and m are as shown in Table 1.

### [Production Example 9]

A glass four-neck flask having an internal volume of 500 mL was substituted with nitrogen, 8.1 g (90 mmol) of 1,4-butanediol and 231 g (2,025 mmol) of β-methyl-δ-valerolactone were added thereto, and the temperature was raised to 60°C. 0.79 mL of n-butyllithium (1.6 M hexane solution) was added thereto, and the mixture was stirred at 60°C for 60 minutes.

Next, 22.1 g (216 mmol) of acetic anhydride and 1.1 g (9.0 mmol) of 4-dimethylaminopyridine dissolved in 11 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 155 g (0.04 mmol) of a polymer.

The obtained polymer (hereinafter, may be referred to as "PMVL-9") is represented by the general formula (I-a) described above (Q represents 4), and R¹, R², n, and m are as shown in Table 1.

### [Production Example 10]

A glass four-neck flask having an internal volume of 500 mL was substituted with nitrogen, 14.4 g (90 mmol) of 1,9-nonanediol and 231 g (2,025 mmol) of β-methyl-δ-valerolactone were added thereto, and the temperature was raised to 60°C. 0.80 mL of n-butyllithium (1.6 M hexane solution) was added thereto, and the mixture was stirred at 60°C for 60 minutes.

Next, 22.1 g (216 mmol) of acetic anhydride and 1.1 g (9.0 mmol) of 4-dimethylaminopyridine dissolved in 11 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 150 g (0.04 mmol) of a polymer.

The obtained polymer (hereinafter, may be referred to as "PMVL-10") is represented by the general formula (I-a) described above (Q represents 9), and R¹, R², n, and m are as shown in Table 1.

### [Production Example 11]

A glass four-neck flask having an internal volume of 500 mL was substituted with nitrogen, 21.8 g (90 mmol) of cetanol and 231 g (2,025 mmol) of β-methyl-δ-valerolactone were added thereto, and the temperature was raised to 60°C. 0.84 mL of n-butyllithium (1.6 M hexane solution) was added thereto, and the mixture was stirred at 60°C for 60 minutes.

Next, 11.0 g (108 mmol) of acetic anhydride and 0.55 g (4.5 mmol) of 4-dimethylaminopyridine dissolved in 5.5 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 158 g (0.04 mmol) of a polymer.

The obtained polymer (hereinafter, may be referred to as "PMVL-11") is represented by the general formula (I) described above, and R¹, R², and n are as shown in Table 1.

### [Production Example 12]

A glass four-neck flask having an internal volume of 500 mL was substituted with nitrogen, 14.2 g (90 mmol) of decanol and 231 g (2,025 mmol) of β-methyl-δ-valerolactone were added thereto, and the temperature was raised to 60°C. 0.80 mL of n-butyllithium (1.6 M hexane solution) was added thereto, and the mixture was stirred at 60°C for 60 minutes.

Next, 11.0 g (108 mmol) of acetic anhydride and 0.55 g (4.5 mmol) of 4-dimethylaminopyridine dissolved in 5.5 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 151 g (0.04 mmol) of a polymer.

The obtained polymer (hereinafter, may be referred to as "PMVL-12") is represented by the general formula (I) described above, and R¹, R², and n are as shown in Table 1.

### [Production Example 13]

A glass four-neck flask having an internal volume of 1,000 mL was substituted with nitrogen, 5.6 g (90 mmol) of ethylene glycol and 639 g (5,598 mmol) of β-methyl-δ-valerolactone were added thereto, and the temperature was raised to 60°C. 0.79 mL of n-butyllithium (1.6 M hexane solution) was added thereto, and the mixture was stirred at 60°C for 60 minutes.

Next, 22.1 g (216 mmol) of acetic anhydride and 1.1 g (9.0 mmol) of 4-dimethylaminopyridine dissolved in 11 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 511 g (0.05 mmol) of a polymer.

The obtained polymer (hereinafter, may be referred to as "PMVL-13") is represented by the general formula (I-b) described above, and R¹, R², n, and m are as shown in Table 1.

### [Production Example 14]

A glass four-neck flask having an internal volume of 2,000 mL was substituted with nitrogen, 5.6 g (90 mmol) of ethylene glycol and 1,072 g (9,396 mmol) of β-methyl-δ-valerolactone were added thereto, and the temperature was raised to 60°C. 0.79 mL of n-butyllithium (1.6 M hexane solution) was added thereto, and the mixture was stirred at 60°C for 60 minutes.

Next, 22.1 g (216 mmol) of acetic anhydride and 1.1 g (9.0 mmol) of 4-dimethylaminopyridine dissolved in 11 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 685 g (0.05 mmol) of a polymer.

The obtained polymer (hereinafter, may be referred to as "PMVL-14") is represented by the general formula (I-b) described above, and R¹, R², n, and m are as shown in Table 1.

### [Production Example 15]

A glass four-neck flask having an internal volume of 500 mL was substituted with nitrogen, 12.1 g (90 mmol) of trimethylolpropane and 231 g (2,025 mmol) of β-methyl-δ-valerolactone were added thereto, and the temperature was raised to 60°C. 0.79 mL of n-butyllithium (1.6 M hexane solution) was added thereto, and the mixture was stirred at 60°C for 60 minutes.

Next, 33.1 g (324 mmol) of acetic anhydride and 1.1 g (9.0 mmol) of 4-dimethylaminopyridine dissolved in 11 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 145 g (0.04 mmol) of a polymer.

The obtained polymer (hereinafter, may be referred to as "PMVL-15") is represented by the general formula (I-e) described above, and R¹, R², n, and m are as shown in Table 1.

### [Production Example 16]

A glass four-neck flask having an internal volume of 2,000 mL was substituted with nitrogen, 12.1 g (90 mmol) of trimethylolpropane and 1,064 g (9,324 mmol) of β-methyl-δ-valerolactone were added thereto, and the temperature was raised to 60°C. 0.79 mL of n-butyllithium (1.6 M hexane solution) was added thereto, and the mixture was stirred at 60°C for 60 minutes.

Next, 33.1 g (324 mmol) of acetic anhydride and 1.1 g (9.0 mmol) of 4-dimethylaminopyridine dissolved in 11 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 873 g (0.05 mmol) of a polymer.

The obtained polymer (hereinafter, may be referred to as "PMVL-16") is represented by the general formula (I-e) described above, and R¹, R², n, and m are as shown in Table 1.

### [Production Example 17]

A glass four-neck flask having an internal volume of 500 mL was substituted with nitrogen, 5.6 g (90 mmol) of ethylene glycol and 231 g (2,025 mmol) of β-methyl-δ-valerolactone were added thereto, and the temperature was raised to 60°C. 0.84 mL of n-butyllithium (1.6 M hexane solution) was added thereto, and the mixture was stirred at 60°C for 60 minutes to perform a ring-opening polymerization reaction.

The obtained reaction solution containing a polymer was purified by extraction with toluene and water and using a thin film evaporator to obtain 135 g (0.04 mmol) of a polymer.

The obtained polymer (hereinafter, may be referred to as "PMVL-17") is represented by the following structural formula (II), and n and m are as shown in Table 1.

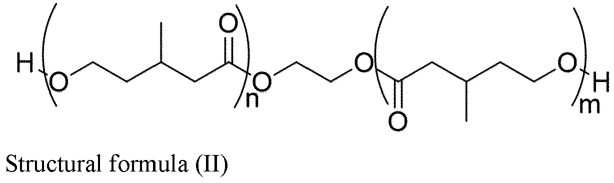

### [Production Example 18]

A glass four-neck flask having an internal volume of 500 mL was substituted with nitrogen, 5.6 g (90 mmol) of ethylene glycol and 231 g (2,025 mmol) of β-methyl-δ-valerolactone were added thereto, and the temperature was raised to 60°C. 0.78 mL of n-butyllithium (1.6 M hexane solution) was added thereto, and the mixture was stirred at 60°C for 60 minutes to perform a ring-opening polymerization reaction.

The obtained reaction solution containing a ring-opening polymer was purified by extraction with toluene and water, reprecipitation into a large amount of hexane, and drying under reduced pressure at 80°C under vacuum.

After 1,500 mL of dichloromethane as a solvent was placed in a glass four-neck flask having an internal volume of 3,000 mL, the purified ring-opening polymer, 22.7 g (270 mmol) of 3,4-dihydro-2H-pyran, and 0.9 g (3.6 mmol) of pyridinium p-toluenesulfonate were placed, and the mixture was stirred at 25°C for 5 hours to obtain a reaction solution containing a polymer.

The obtained reaction solution containing a polymer was purified by extraction with dichloromethane and water and distillation, thereby obtaining 114 g (0.06 mmol) of a polymer.

The obtained polymer (hereinafter, may be referred to as "PMVL-18") is represented by the following structural formula (III), and n and m are as shown in Table 1.

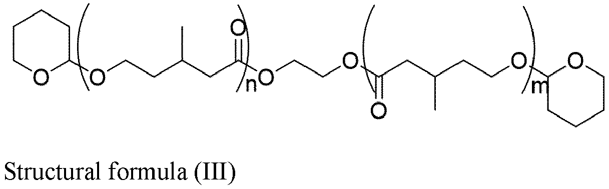

### [Production Example 19]

A glass four-neck flask having an internal volume of 500 mL was substituted with nitrogen, 7.9 g (90 mmol) of isoamyl alcohol and 231 g (2,025 mmol) of β-methyl-δ-valerolactone were added thereto, and the temperature was raised to 60°C. 0.84 mL of n-butyllithium (1.6 M hexane solution) was added thereto, and the mixture was stirred at 60°C for 60 minutes to perform a ring-opening polymerization reaction.

The obtained reaction solution containing a ring-opening polymer was purified by extraction with toluene and water, and using a thin film evaporator.

After 1,500 mL of dichloromethane as a solvent was placed in a glass four-neck flask having an internal volume of 3,000 mL, the purified ring-opening polymer, 11.4 g (135 mmol) of 3,4-dihydro-2H-pyran, and 0.45 g (1.8 mmol) of pyridinium p-toluenesulfonate were placed, and the mixture was stirred at 25°C for 5 hours to obtain a reaction solution containing a polymer.

The obtained reaction solution containing a polymer was purified by extraction with dichloromethane and water and distillation, thereby obtaining 130 g (0.04 mmol) of a polymer. The obtained polymer (hereinafter, may be referred to as "PMVL-19") is represented by the following structural formula (IV), and n is as shown in Table 1.

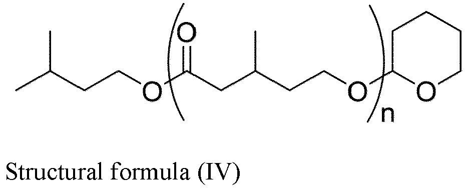

The measured values of the number average molecular weight, the weight average molecular weight, and the viscosity of the polymers obtained in Production Examples are shown in Table 1.

**Table 1**

| | R¹ | R² | n | m | Number average molecular weight | Wight average molecular weight | Viscosity (mPa·s) | Measurement temperature (°C) |
|---|---|---|---|---|---|---|---|---|
| Production Example 1 | (CH₃)₂CHCH₂CH₂ | CH₃ | 25 | - | 4,000 | 6,000 | 5,500 | 30 |
| Production Example 2 | (CH₃)₂CHCH₂CH₂ | CH₃ | 90 | - | 10,300 | 23,700 | 38,500 | 60 |
| Production Example 3 | (CH₃)₂CHCH₂CH₂ | CH₃ | 215 | - | 25,300 | 49,300 | 123,000 | 80 |
| Production Example 4 | (CH₃)₂CHCH₂CH₂ | CH₃ | 420 | - | 48,000 | 92,500 | Unmeasurable | 80 |
| Production Example 5 | (CH₃)₂CHCH₂CH₂ | CH₃ | 570 | - | 68,000 | 115,000 | Unmeasurable | 80 |
| Production Example 6 | X-CH₂CH₂ | CH₃ | 13 | 13 | 4,200 | 6,500 | 5,700 | 30 |
| Production Example 7 | X-CH₂CH₂ | n-Pr | 13 | 13 | 4,200 | 6,500 | 5,800 | 30 |
| Production Example 8 | X-CH₂CH₂ | Ph | 11 | 11 | 3,300 | 5,100 | 5,000 | 30 |
| Production Example 9 | X-CH₂CH₂CH₂CH₂ | CH₃ | 13 | 13 | 4,100 | 6,300 | 5,700 | 30 |
| Production Example 10 | X-C₉H₁₈ | CH₃ | 12 | 12 | 4,000 | 6,200 | 5,400 | 30 |
| Production Example 11 | C₁₆H₃₃ | CH₃ | 25 | - | 4,200 | 6,600 | 6,000 | 30 |
| Production Example 12 | C₁₀H₂₁ | CH₃ | 24 | - | 4,000 | 6,200 | 5,600 | 30 |
| Production Example 13 | X-CH₂CH₂ | CH₃ | 40 | 40 | 9,400 | 19,500 | 35,000 | 60 |
| Production Example 14 | X-CH₂CH₂ | CH₃ | 60 | 60 | 13,900 | 27,000 | 44,500 | 60 |
| Production Example 15 | CH₃CH₂C(CH₂)(CH₂-X)₂ | CH₃ | 8 | 8 | 3,900 | 5,800 | 5,100 | 30 |
| Production Example 16 | CH₃CH₂C(CH₂)(CH₂-X)₂ | CH₃ | 54 | 54 | 18,700 | 35,000 | 50,300 | 60 |
| Production Example 17 | Structural formula (II) | | 10 | 10 | 3,500 | 5,200 | 5,100 | 30 |
| Production Example 18 | Structural formula (III) | | 11 | 11 | 3,600 | 5,400 | 5,200 | 30 |
| Production Example 19 | Structural formula (IV) | | 22 | - | 3,600 | 5,300 | 5,200 | 30 |

The notation in Table 1 is as follows.
· In the column of R¹, "X" indicates the above-mentioned formula (X).
· In the column of R², "n-Pr" indicates a n-propyl group.
· In the column of R² , "Ph" indicates a phenyl group.
· In the column of viscosity, "unmeasurable" means that the viscosity of the polymer was high and could not be measured even when the viscosity measurement temperature was increased to 80°C.

### [Examples 1 to 24 and Comparative Examples 1 to 9]

The polylactic acid polymer "INGEO 2500HP" and the polymers obtained in Production Examples, and other components were charged into a kneader Labo Plastomill (manufactured by Toyo Seiki Seisaku-Sho, Ltd., product name "3S150") at a blending ratio shown in Tables 2 to 4, melt-kneaded at a cylinder temperature of 210°C and a screw rotation speed of 50 rpm for 5 minutes, and then extruded into a strand shape and cut to obtain a resin composition. The obtained resin composition was evaluated as described above. The results are shown in Tables 2 to 4.

### [Examples 25 to 28 and Comparative Example 10]

The polylactic acid polymer "INGEO 3001D" and the polymers obtained in Production Examples, and other components were charged into a twin-screw extruder (manufactured by Technovel Corporation, screw diameter: ϕ15 mm, LID = 45) at a blending ratio shown in Table 5, kneaded at a cylinder temperature of 180 to 210°C and a screw rotation speed of 300 rpm, and then extruded into a strand shape and cut to obtain a resin composition. The obtained resin composition was evaluated as described above. The results are shown in Table 5.

### [Examples 29 to 31 and Comparative Examples 11 and 12]

The polylactic acid polymer "INGEO 2003D" and the polymers obtained in Production Examples, and other components were charged into an extruder molding machine (manufactured by Technovel Corporation, screw diameter: ϕ15 mm, LID = 45) at a blending ratio shown in Table 6, kneaded at a cylinder temperature of 180 to 210°C and a screw rotation speed of 300 rpm, and then melt-extruded into a sheet shape from a T-die. Next, the obtained sheet was cooled and solidified on a cooling roll at 55°C to obtain a resin composition sheet having a thickness of 0.4 mm. The obtained resin composition sheet was evaluated as described above. The results are shown in Table 6.

**Table 2**

| | | Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Polylactic acid polymer (parts by mass) | | 100 | 100 | 100 | 100 | 100 | 100 | 100 | 100 | 100 | 100 | 100 |
| Polymer (parts by mass) | PMVL-1 | 1 | 4 | 10 | 20 | | | | | | | |
| | PMVL-2 | | | | | 1 | 4 | 10 | | | | |
| | PMVL-3 | | | | | | | | 1 | 4 | 10 | 10 |
| Colloidal silica (parts by mass) | | | | | | | | | | | | 0.5 |
| Erucic acid amide (parts by mass) | | | | | | | | | | | | 1 |
| Tg (°C) | | 60 | 58 | 55 | 53 | 61 | 60 | 60 | 61 | 61 | 61 | 59 |
| Tm (°C) | | 177 | 176 | 176 | 176 | 176 | 176 | 176 | 176 | 177 | 177 | 176 |
| Crystallization time (min) | | 2.0 | 5.4 | 6.7 | 4.5 | 2.7 | 6.7 | 7.2 | 3.4 | 8.0 | 9.0 | 7.4 |
| Impact strength (kJ/m²) | | 3 | 18 | 42 | 11 | 13 | 44 | 19 | 10 | 40 | 31 | 26 |
| Tensile test | Initial tensile elastic modulus (MPa) | 4,459 | 4,473 | 3,496 | 2,601 | 3,581 | 3,910 | 3,158 | 3,389 | 3,545 | 3,232 | 3,193 |
| | Maximum point strength (MPa) | 71 | 63 | 49 | 37 | 71 | 53 | 43 | 65 | 53 | 45 | 47 |
| | Elongation at break (%) | 6 | 101 | 301 | 49 | 11 | 152 | 110 | 4 | 86 | 100 | 107 |
| Bleed-out | | A | A | A | B | A | A | A | A | A | A | A |

**Table 3**

| | | Example | | | | | | | | | | | | |
|---|---|---|---|---|---|---|---|---|---|---|---|---|---|---|
| | | 12 | 13 | 14 | 15 | 16 | 17 | 18 | 19 | 20 | 21 | 22 | 23 | 24 |
| Polylactic acid polymer (parts by mass) | | 100 | 100 | 100 | 100 | 100 | 100 | 100 | 100 | 100 | 100 | 100 | 100 | 100 |
| Polymer (parts by mass) | PMVL-1 | | | | | | | | | | | | | |
| | PMVL-2 | | | | | | | | | | | | | |
| | PMVL-3 | | | | | | | | | | | | | |
| | PMVL-4 | 10 | | | | | | | | | | | | |
| | PMVL-5 | | 10 | | | | | | | | | | | |
| | PMVL-6 | | | 10 | | | | | | | | | | |
| | PMVL-7 | | | | 10 | | | | | | | | | |
| | PMVL-8 | | | | | 10 | | | | | | | | |
| | PMVL-9 | | | | | | 10 | | | | | | | |
| | PMVL-10 | | | | | | | 10 | | | | | | |
| | PMVL-11 | | | | | | | | 10 | | | | | |
| | PMVL-12 | | | | | | | | | 10 | | | | |
| | PMVL-13 | | | | | | | | | | 10 | | | |
| | PMVL-14 | | | | | | | | | | | 10 | | |
| | PMVL-15 | | | | | | | | | | | | 10 | |
| | PMVL-16 | | | | | | | | | | | | | 10 |
| Colloidal silica (parts by mass) | | | | | | | | | | | | | | |
| Erucic acid amide (parts by mass) | | | | | | | | | | | | | | |
| Tg (°C) | | 60 | 60 | 53 | 55 | 55 | 55 | 55 | 55 | 55 | 60 | 59 | 54 | 59 |
| Tm (°C) | | 176 | 176 | 175 | 176 | 176 | 176 | 176 | 176 | 176 | 176 | 176 | 176 | 176 |
| Crystallization time (min) | | 7.0 | 7.1 | 6.4 | 6.5 | 6.4 | 6.4 | 6.3 | 6.5 | 6.6 | 6.9 | 7.0 | 6.2 | 6.9 |
| Impact strength (kJ/m²) | | 33 | 25 | 33 | 31 | 30 | 33 | 30 | 30 | 32 | 28 | 27 | 31 | 29 |
| Tensile test | Initial tensile elastic modulus (MPa) | 3,205 | 3,249 | 3,530 | 3,535 | 3,540 | 3,528 | 3,557 | 3,305 | 3,321 | 3,170 | 3,180 | 3,612 | 3,106 |
| | Maximum point strength (MPa) | 48 | 50 | 53 | 54 | 54 | 53 | 54 | 50 | 51 | 44 | 45 | 49 | 45 |
| | Elongation at break (%) | 80 | 70 | 110 | 95 | 92 | 92 | 90 | 85 | 85 | 110 | 105 | 80 | 110 |
| Bleed-out | | A | A | A | A | A | A | A | A | A | A | A | A | A |

**Table 4**

| | | Comparative Example | | | | | | | | |
|---|---|---|---|---|---|---|---|---|---|---|
| | | 1 | 2 | 3 | 4 | 5 | 6 | 7 | 8 | 9 |
| Polylactic acid polymer (parts by mass) | | 100 | 100 | 100 | 100 | 100 | 100 | 100 | 100 | 100 |
| Dibasic acid ester (parts by mass) | | | 1 | 4 | 10 | | | | | |
| PBSA (parts by mass) | | | | | | 10 | 20 | | | |
| Polymer (parts by mass) | PMVL-17 | | | | | | | 10 | | |
| | PMVL-18 | | | | | | | | 10 | |
| | PMVL-19 | | | | | | | | | 10 |
| Colloidal silica (parts by mass) | | | | | | 0.5 | | | | |
| Erucic acid amide (parts by mass) | | | | | | 1 | | | | |
| Tg (°C) | | 61 | 60 | 55 | 41 | 59 | 60 | 53 | 54 | 55 |
| Tm (°C) | | 176 | 177 | 176 | 172 | 176 | 176 | 176 | 176 | 176 |
| Crystallization time (min) | | 3.0 | 3.9 | 5.9 | 6.6 | 5.9 | 7.5 | 6.3 | 6.2 | 6.2 |
| Impact strength (kJ/m²) | | 9 | 10 | 8 | 22 | 26 | 27 | 13 | 14 | 14 |
| Tensile test | Initial tensile elastic modulus (MPa) | 3,649 | 4,341 | 3,340 | 1,800 | 3,499 | 3,318 | 3,503 | 3,558 | 3,580 |
| | Maximum point strength (MPa) | 71 | 66 | 56 | 34 | 58 | 54 | 48 | 50 | 51 |
| | Elongation at break (%) | 3 | 3 | 9 | 24 | 46 | 10 | 35 | 40 | 41 |
| Bleed-out | | A | A | A | A | A | A | A | A | A |

**Table 5**

| | | Comparative Example | Example | | | |
|---|---|---|---|---|---|---|
| | | 10 | 25 | 26 | 27 | 28 |
| Polylactic acid polymer (parts by mass) | | 100 | 100 | 100 | 100 | 100 |
| Polymer (parts by mass) | PMVL-1 | | 4 | 10 | | |
| | PMVL-2 | | | | 4 | 10 |
| Hydrolysis inhibitor (parts by mass) | | 1 | 1 | 1 | 1 | 1 |
| Tg (°C) | | 60 | 56 | 54 | 60 | 59 |
| Tm (°C) | | 163 | 162 | 162 | 162 | 162 |
| Crystallization time (min) | | 3.0 | 5.3 | 6.5 | 6.3 | 6.9 |
| Impact strength (kJ/m²) | | 3 | 5 | 8 | 5 | 17 |
| Tensile test | Initial tensile elastic modulus (MPa) | 2,940 | 2,710 | 2,540 | 2,600 | 2,460 |
| | Maximum point strength (MPa) | 69 | 61 | 48 | 62 | 50 |
| | Elongation at break (%) | 3 | 10 | 57 | 4 | 12 |
| Bleed-out | | A | A | A | A | A |

**Table 6**

| | | Comparative Example | | Example | | |
|---|---|---|---|---|---|---|
| | | 11 | 12 | 29 | 30 | 31 |
| Polylactic acid polymer (parts by mass) | | 100 | 100 | 100 | 100 | 100 |
| Dibasic acid ester (parts by mass) | | | 4 | | | |
| Polymer (parts by mass) | PMVL-1 | | | 4 | | |
| | PMVL-13 | | | | 4 | |
| | PMVL-14 | | | | | 4 |
| Tg (°C) | | 59 | 51 | 54 | 58 | 58 |
| Tm (°C) | | 152 | 150 | 151 | 152 | 151 |
| Impact strength (kJ/m²) | | 0.7 | 0.7 | 0.6 | 1.6 | 1.1 |
| Tensile test | Initial tensile elastic modulus (MPa) | 3,300 | 3,300 | 3,100 | 3,300 | 3,100 |
| | Maximum point strength (MPa) | 58 | 50 | 54 | 58 | 54 |
| | Elongation at break (%) | 6 | 6 | 20 | 19 | 6 |
| Total light transmittance (%) | | 91 | 91 | 91 | 91 | 91 |

From Examples 1, 5, and 8 and Comparative Example 1, it is found that the resin compositions of the Examples are resin compositions in which the tensile elongation at break is improved and the decrease in the glass transition temperature is suppressed, and the crystallization rate is good.

From the comparison between Examples 2, 3, 6, 7, 9, 10, and 12 to 24 and Comparative Examples 3 and 4, it is found that the resin compositions of the Examples are resin compositions in which the tensile elongation at break is remarkably improved and the decrease in the glass transition temperature is suppressed, and the impact resistance is good.

From the comparison between Example 11 and Comparative Example 5, it is found that the resin composition of Example 11 is a resin composition in which the tensile elongation at break is favorably improved and the decrease in the glass transition temperature is suppressed.

From the comparison between Example 4 and Comparative Example 6, it is found that the resin composition of Example 4 is a resin composition in which the tensile elongation at break is favorably improved.

From the comparison between Example 3 and Comparative Example 9 and the comparison between Example 14 and Comparative Examples 7 and 8, it is found that the resin compositions of the Examples are resin compositions having an improved tensile elongation at break and good impact resistance.

From Examples 1 to 24 and Comparative Example 1, it is found that the resin compositions of the Examples are resin compositions in which the tensile elongation at break is improved and the decrease in the glass transition temperature is suppressed, and from Examples 1 to 24 and Comparative Examples 2 to 9, it is found that the excellent modification effect of the polymer on the polylactic acid is exhibited.

From the comparison between Examples 25 to 28 and Comparative Example 10, it is found that the resin compositions of the Examples are resin compositions in which the tensile elongation at break is improved and the decrease in the glass transition temperature is suppressed regardless of the molding method.

From the comparison between Examples 29 to 31 and Comparative Example 11, it is found that even in the sheet molded product obtained by melt extrusion, the tensile elongation at break and/or the impact strength are improved without impairing the light transmittance in the Examples. In addition, from the comparison between Examples 29 to 31 and Comparative Example 12, it is found that in the sheet molded products of the Examples, the decrease in the glass transition temperature is suppressed, the tensile elongation at break and/or the impact strength are improved, and the excellent modification effect of the polymer on the polylactic acid is exhibited.

### Industrial Applicability

The resin composition of the present embodiment is a resin composition in which the tensile elongation at break is improved and the decrease in the glass transition temperature is suppressed with respect to polylactic acid, and is useful for applications in which these physical properties are required. The resin composition of the present embodiment can be used, for example, in food utensils, stoppers, cap liners, films and sheets, fibers, adhesives (tackifiers), adhesive (adhesion imparting) agents, coating agents, filaments for 3D printers, developing toners, support materials during hydraulic fracturing, water break inhibitors during excavation, anti-vibration members, damping members, automobile interior and exterior parts, and various grips.

## Claims

1. A resin composition comprising a polylactic acid polymer and a β-methyl-δ-valerolactone polymer.

2. The resin composition according to claim 1, wherein the β-methyl-δ-valerolactone polymer is represented by the following general formula (I): 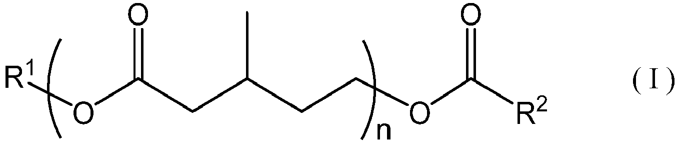 wherein, R¹ represents a hydrogen atom, a linear or branched alkyl group having 1 to 20 carbon atoms, a linear or branched alkenyl group having 2 to 20 carbon atoms, an aryl group having 6 to 12 carbon atoms, an arylalkyl group having 7 to 12 carbon atoms, an oxygen atom-containing hydrocarbon group in which one hydrogen atom bonded to a carbon atom at a terminal of a linear alkyl group having 1 to 20 carbon atoms is substituted with a group represented by the following formula (X), or an oxygen atom-containing hydrocarbon group in which one hydrogen atom bonded to a carbon atom at at least one terminal of a branched alkyl group having 3 to 20 carbon atoms is substituted with a group represented by the following formula (X); in the following formula (X), a bonding site represented by * is bonded to the linear alkyl group having 1 to 20 carbon atoms or the branched alkyl group having 3 to 20 carbon atoms; 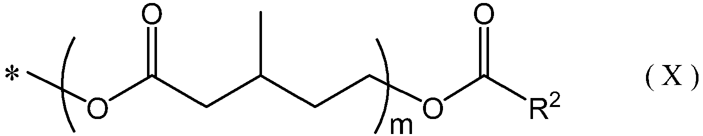 R² represents a linear or branched alkyl group having 1 to 20 carbon atoms, a linear or branched alkenyl group having 2 to 20 carbon atoms, an aryl group having 6 to 12 carbon atoms, or an arylalkyl group having 7 to 12 carbon atoms; n is an integer of 8 to 1,000, and m is an integer of 8 to 1,000; and when a plurality of R²'s and m's are present, they may be the same or different from each other.

3. The resin composition according to claim 1 or 2, wherein the β-methyl-δ-valerolactone polymer is contained in an amount of 0.1 parts by mass or more and 50 parts by mass or less with respect to 100 parts by mass of the polylactic acid polymer.

4. The resin composition according to any one of claims 1 to 3, wherein the β-methyl-δ-valerolactone polymer has a number average molecular weight of 1,000 or more and 100,000 or less.

5. The resin composition according to any one of claims 1 to 3, wherein the β-methyl-δ-valerolactone polymer is contained in an amount of 0.5 parts by mass or more and 2 parts by mass or less with respect to 100 parts by mass of the polylactic acid polymer, and the β-methyl-δ-valerolactone polymer has a number average molecular weight of 1,000 or more and 10,000 or less.

6. The resin composition according to any one of claims 1 to 3, wherein the β-methyl-δ-valerolactone polymer is contained in an amount of 2 parts by mass or more and 50 parts by mass or less with respect to 100 parts by mass of the polylactic acid polymer, and the β-methyl-6-valerolactone polymer has a number average molecular weight of 1,000 or more and 100,000 or less.

7. The resin composition according to any one of claims 1 to 6, wherein the polylactic acid polymer is a homopolymer of L-lactic acid, a homopolymer of D-lactic acid, or a copolymer of L-lactic acid and D-lactic acid.

8. A molded body comprising the resin composition according to any one of claims 1 to 7.

9. A modifier for a polylactic acid polymer, comprising a β-methyl-δ-valerolactone polymer represented by the following general formula (I): 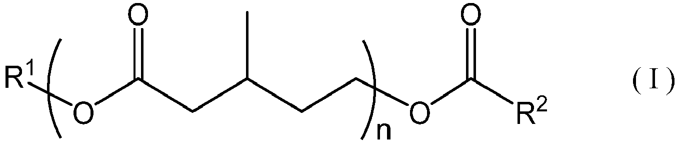 wherein, R¹ represents a hydrogen atom, a linear or branched alkyl group having 1 to 20 carbon atoms, a linear or branched alkenyl group having 2 to 20 carbon atoms, an aryl group having 6 to 12 carbon atoms, an arylalkyl group having 7 to 12 carbon atoms, an oxygen atom-containing hydrocarbon group in which one hydrogen atom bonded to a terminal carbon atom of a linear alkyl group having 1 to 20 carbon atoms is substituted with a group represented by the following formula (X), or an oxygen atom-containing hydrocarbon group in which one hydrogen atom bonded to a terminal carbon atom of a branched alkyl group having 3 to 20 carbon atoms is substituted with a group represented by the following formula (X); in the following formula (X), a bonding site represented by * is bonded to the linear alkyl group having 1 to 20 carbon atoms or the branched alkyl group having 3 to 20 carbon atoms; 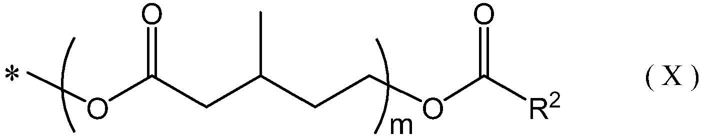 R² represents a linear or branched alkyl group having 1 to 20 carbon atoms, a linear or branched alkenyl group having 2 to 20 carbon atoms, an aryl group having 6 to 12 carbon atoms, or an arylalkyl group having 7 to 12 carbon atoms; n is an integer of 8 to 1,000, and m is an integer of 8 to 1,000; and when a plurality of R²'s and m's are present, they may be the same or different from each other.

10. Use of a β-methyl-δ-valerolactone polymer represented by the following general formula (I) as a modifier for a polylactic acid polymer: 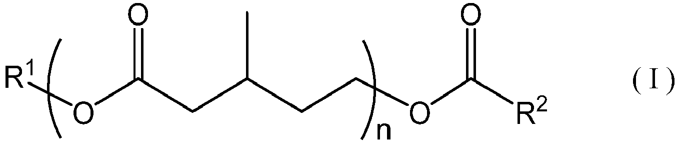 wherein, R¹ represents a hydrogen atom, a linear or branched alkyl group having 1 to 20 carbon atoms, a linear or branched alkenyl group having 2 to 20 carbon atoms, an aryl group having 6 to 12 carbon atoms, an arylalkyl group having 7 to 12 carbon atoms, an oxygen atom-containing hydrocarbon group in which one hydrogen atom bonded to a terminal carbon atom of a linear alkyl group having 1 to 20 carbon atoms is substituted with a group represented by the following formula (X), or an oxygen atom-containing hydrocarbon group in which one hydrogen atom bonded to a terminal carbon atom of a branched alkyl group having 3 to 20 carbon atoms is substituted with a group represented by the following formula (X); in the following formula (X), a bonding site represented by * is bonded to the linear alkyl group having 1 to 20 carbon atoms or the branched alkyl group having 3 to 20 carbon atoms; 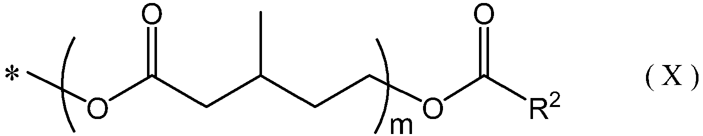 R² represents a linear or branched alkyl group having 1 to 20 carbon atoms, a linear or branched alkenyl group having 2 to 20 carbon atoms, an aryl group having 6 to 12 carbon atoms, or an arylalkyl group having 7 to 12 carbon atoms; n is an integer of 8 to 1,000, and m is an integer of 8 to 1,000; and when a plurality of R²'s and m's are present, they may be the same or different from each other.
